(19) Europäisches Patentamt
European Patent Office
Office européen des brevets

(11) EP 2 716 679 B1

(12) **EUROPEAN PATENT SPECIFICATION**

(45) Date of publication and mention of the grant of the patent:
**22.01.2020 Bulletin 2020/04**

(21) Application number: **12792454.6**

(22) Date of filing: **30.05.2012**

(51) Int Cl.:
*C08G 64/30* (2006.01) *C08G 18/44* (2006.01)
*C08G 64/02* (2006.01) *C08G 18/66* (2006.01)
*C08G 18/76* (2006.01) *C09D 175/06* (2006.01)

(86) International application number:
**PCT/JP2012/063980**

(87) International publication number:
**WO 2012/165502 (06.12.2012 Gazette 2012/49)**

(54) **METHOD FOR PRODUCING POLYCARBONATE POLYOLS, POLYURETHANE USING SAID POLYCARBONATE POLYOLS**

VERFAHREN ZUR HERSTELLUNG VON POLYCARBONATPOLYOLEN UND POLYURETHAN MIT DIESEN POLYCARBONATPOLYOLEN

PROCÉDÉ DE FABRICATION DE POLYOLS DE POLYCARBONATE, POLYURÉTHANE UTILISANT LESDITS POLYOLS DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011 JP 2011120728**

(43) Date of publication of application:
**09.04.2014 Bulletin 2014/15**

(73) Proprietor: **Mitsubishi Chemical Corporation**
**Tokyo 100-8251 (JP)**

(72) Inventors:
- **KUSANO Kazunao**
  **Fukuoka 806-0004 (JP)**
- **YAMAMOTO Masanori**
  **Fukuoka 806-0004 (JP)**

(74) Representative: **Vossius & Partner**
**Patentanwälte Rechtsanwälte mbB**
**Siebertstrasse 3**
**81675 München (DE)**

(56) References cited:
**WO-A1-2011/065505** **JP-A- 2002 030 143**
**JP-A- 2010 126 591** **JP-A- 2010 270 165**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 716 679 B1

## Description

### Technical Field

The present invention relates to a production method of a polycarbonate polyol. The present invention also relates to a polycarbonate-based polyurethane with an excellent balance of physical properties, which is produced using the polycarbonate polyol as a raw material and is useful in applications for a paint, a coating agent, a synthetic•artificial leather, a highly functional elastomer and the like.

### Background Art

The raw material of the main soft segment part of a polyurethane resin that has been conventionally produced on an industrial scale includes an ether type represented by polytetramethylene glycol, an ester type represented by an adipate-based ester, a polylactone type represented by polycaprolactone, and a polycarbonate type represented by polycarbonate polyol (Non-Patent Document 1).

Of these, the polycarbonate type using a polycarbonate diol is of best endurance grade in terms of heat resistance and hydrolysis resistance and is widely used as a durable film, an artificial leather for cars and furniture, a paint (particularly an aqueous paint), a coating agent, and an adhesive. Under these circumstances, a method of using a special dihydroxy compound as a monomer component and performing a transesterification with a carbonic acid diester to obtain a polycarbonate polyol while distilling out a byproduct monohydroxy compound under reduced pressure has been proposed (see, for example, Patent Documents 1 to 3).

However, a dihydroxy compound having such a special structure is low in the boiling point as compared with bisphenols and has a problem that significant volatilization occurs during a transesterification reaction performed at a high temperature under reduced pressure and this not only causes reduction in the raw material consumption rate but also makes it difficult to control the terminal group concentration affecting the quality to a predetermined value, or a problem that when a plurality of kinds of dihydroxy compounds are used, the molar ratio of dihydroxy compounds used is changed during polymerization and a polycarbonate polyol having a desired molecular weight or composition is not obtained.

In order to solve such a problem, a method of, for example, lowering the polymerization temperature or easing the degree of pressure reduction is studied, but this method faces a dilemma where volatilization of the monomer is suppressed but the productivity is reduced. Accordingly, there have been also disclosed a method of using a polymerization reactor having a specific reflux condenser (see, for example, Patent Document 4) or a technique for improving the raw material consumption rate at the time of reacting a diaryl carbonate with a polyol to produce a polycarbonate polyol (see, for example, Patent Document 5).

### Background Art Document

#### Patent Document

Patent Document 1: International Publication No. 2004/111106
Patent Document 2: JP-A-5-51428 (the term "JP-A" as used herein means an "unexamined published Japanese patent application")
Patent Document 3: JP-A-2-289616
Patent Document 4: JP-A-2008-56844
Patent Document 5: Japanese Patent No. 4198940

#### Non-Patent Document

Non-Patent Document 1: Katsuji Matsunaga (supervisor), Polyurethane no Kiso to Oyo (Basics and Applications of Polyurethane), pp. 96-106, CMC Shuppan, November 2006.

### Summary of Invention

#### Problem that Invention is to Solve

In the conventionally known technique for producing a polycarbonate polyol, a method capable of efficiently

producing a polycarbonate polyol having good hue has not yet been established. An object of the present invention is to establish a method capable of efficiently producing a polycarbonate polyol and provide a method for producing a high-quality polycarbonate polyol having good hue and high transparency.

Means for Solving Problem

As a result of many intensive studies to attain the object above, the present inventors have found that it is effective to produce a polycarbonate polyol by a method of performing a polycondensation reaction of a dihydroxy compound with a carbonic acid diester through a transesterification reaction therebetween in the presence of a catalyst, thereby producing a specific polycarbonate polyol, wherein at least one reactor for distilling out a monohydroxy compound generated as a byproduct during the transesterification reaction is a reactor having an internal volume of 20 L or more and being equipped with a reflux condenser and a heating device for heating the reactor by using a heat medium, the difference between the temperature of the heat medium and the temperature of the reaction solution in the reactor is at least 5°C or more, and the total amount of monomers distilled out in all reaction steps is kept at 15 wt% or less based on the gross weight of raw material monomers. The present invention has been achieved based on this finding.

That is, the present invention resides in the present claims.

Effects of Invention

According to the present invention, a polycarbonate polyol with low coloration can be efficiently produced and as compared with a polyurethane using a polycarbonate polyol obtained by the conventionally known production method, a polyurethane using the polycarbonate polyol produced by the present invention enjoys less coloration and good hue and is suitable for applications requiring durability against an external physical factor, such as various paints, coating agents and adhesives. Thus, the present invention is industrially very useful.

Mode for Carrying Out Invention

The mode for carrying out the present invention is described in detail below, but the present invention is not limited to the following embodiments and can be implemented by making various modifications therein without departing from its gist.

In the description of the present invention, "mass%" and "ppm by mass" have the same meanings as "wt%" and "ppm by weight", respectively.

The present invention relates to a method for producing a polycarbonate polyol by performing a polycondensation reaction of a dihydroxy compound with a carbonic acid diester through a transesterification reaction therebetween in the presence of a catalyst. The polycarbonate polyol has a repeating unit represented by the following formula (A) (hereinafter, sometimes referred to as "structure (A)") and has a hydroxyl value of 10 to 400 mgKOH/g, and in the production method, a reactor having an internal volume of 20 L or more and being equipped with a reflux condenser and a heating device for heating the reactor by using a heat medium is used as at least one reactor for distilling out a monohydroxy compound generated as a byproduct during the transesterification reaction, the difference between the temperature of the heat medium and the temperature of the reaction solution in the reactor is at least 5°C or more, and the total amount of monomers distilled out in all reaction steps is kept at 15 wt% or less based on the gross weight of raw material monomers. The polycondensation reaction according to the present invention is preferably performed in steps using a plurality of reactors.

[Chem. 5]

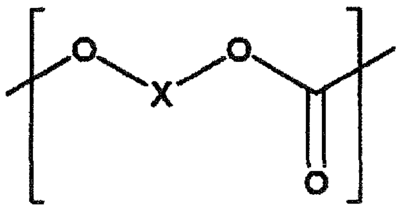

(A)

(wherein X represents a divalent group having a carbon number of 1 to 20, which may contain a heteroatom).

[Characteristic Configuration of the Present Invention]

In the present invention, a reactor having an internal volume of 20 L or more and being equipped with a reflux condenser and a heating device for heating the reactor by using a heat medium is used as at least one reactor for distilling out a monohydroxy compound generated as a byproduct. The difference between the temperature of the heat medium and the temperature of the reaction solution in the reactor is at least 5°C or more, and the total amount of monomers distilled out in all reaction steps is kept at 15 wt% or less based on the gross weight of raw material monomers. The internal volume of the reactor is preferably 30 L or more. In the present invention, as the internal volume of the reactor is larger, the effect of the present invention is greater.

In the method of the present invention, a carbonic acid diester and a dihydroxy compound are subjected to a polycondensation reaction in the presence of the later-described catalyst, and among others, polycondensation is preferably performed by a transesterification reaction in multiple steps by using a plurality of reactors (sometimes simply referred to as polymerization). In this polymerization reaction, a monohydroxy compound (for example, when diphenyl carbonate is used as the carbonic acid diester, phenol) is generated as a byproduct. The polymerization is performed while distilling out the byproduct monohydroxy compound to the outside of the system, but in the initial stage of polymerization, the amount of a byproduct monohydroxy compound generated per unit time is great and a large amount of evaporation latent heat is deprived. Therefore, in the present invention, at least one reactor (hereinafter, sometimes referred to as "specific reactor") is a reactor having an internal volume of 20 L or more and being equipped with a heating device for heating the reactor by using a heat medium, the temperature of the heat medium introduced is higher than the temperature of the reaction solution in the reactor (hereinafter, sometimes referred to as "internal temperature"), that is, a temperature difference of at least 5°C or more (temperature of heat medium ≥ (internal temperature + 5°C)) is created therebetween, and the total amount of monomers distilled out in all reaction steps is kept at 15 wt% or less based on the gross weight of raw material monomers.

The heating device for heating the reactor by using a heat medium includes, for example, a jacket form provided in the periphery (entire circumference or partially) of the reactor (hereinafter, sometimes simply referred to as a heat medium jacket), a form of providing an internal coil inside the reactor, and a form of providing a heat exchanger outside the reactor, and a heat medium jacket is preferred. In the case of using a heat medium jacket, in order to prevent the temperature of the heat medium in the jacket from excessively rising, it is effective to provide an internal coil inside the reactor for applying heat also from the inside of the reactor and thereby increase the heating transfer area.

If the difference between the temperature of the heat medium and the temperature of the reaction solution is less than 5°C, the heat balance of the reactor may deteriorate and the temperature of the reaction solution may not reach the predetermined temperature. In particular, when the size of the rector is increased and, for example, in the case where the heating device is a heat medium jacket, the heat transfer area of the heat medium jacket relative to the internal volume of the reactor tends to be decreased. For this reason, the difference between the temperature of the heat medium and the temperature of the reaction solution is preferably made large and is preferably 10°C or more, more preferably 15°C or more.

Conversely, if the difference between the temperature of the heat medium and the temperature of the reaction solution is too large, not only the distillate volume of the raw material monomer is increased but also heat deterioration of the contents becomes significant. For this reason, the temperature difference is preferably 80°C or less, more preferably 40°C or less, still more preferably 30°C or less.

The temperature of the heat medium introduced may be appropriately determined according to the reaction solution temperature that is intended to achieve, but if the temperature of the heat medium is too high, the distillate volume of the raw material monomer is excessively increased. For this reason, the maximum temperature is preferably less than 240°C, more preferably less than 230°C, still more preferably less than 220°C, yet still more preferably less than 215°C, and most preferably less than 210°C.

As for setting the temperature of the heat medium to be higher by 5°C or more than the temperature of the reaction solution, the temperature of the heat medium may be kept higher by 5°C or more throughout the reaction time in one reactor or may be raised only for the time•period where distillation of a monohydroxy compound is significant. In general, the former is employed in a continuous reaction, and the latter is employed in a batch reaction.

Incidentally, in the present invention, the temperature of the heat medium indicates the temperature before introducing the heat medium into the heating device, for example, in the case where the heating device is a heat medium jacket, indicates the temperature of the heat medium before introducing it into the heat medium jacket provided in the periphery (entire circumference or partially) of the reactor. Also, in the present invention, the temperature of the reaction solution indicates the temperature of the reaction solution measured by a measuring instrument such as thermocouple.

The distillate volume of the monohydroxy compound generated as a byproduct by the polymerization reaction in the present invention is preferably 20% or more, more preferably 50% or more, of the theoretical distillate volume. The internal temperature (maximum temperature) of the specific reactor from which a monohydroxy compound distills out is usually from 90 to 220°C, preferably from 100 to 210°C, more preferably from 110 to 200°C, still more preferably

from 120 to 190°C, and most preferably from 130 to 180°C. If the internal temperature is excessively high, not only the distillate volume of the raw material monomer is increased but also the heat deterioration becomes significant, whereas if the internal temperature is excessively low, the reaction rate decreases to reduce the production efficiency. Also, if the ratio of the distillate volume of the monohydroxy compound to the theoretical distillate volume is low, the reaction may not be completed and a desired polycarbonate polyol may not be obtained.

Here, in the present invention, the theoretical distillate volume of the monohydroxy compound is the molar number twice the molar number of the carbonic acid diester used as a raw material. The reactor from which the monohydroxy compound distills out in an amount of 20% or more of the theoretical distillate volume means, in the case of a batch reaction, a reactor in which the distillate volume as calculated from the total amount of the monohydroxy compound distilled out of one reactor, based on the amount of the carbonic acid diester compound initially charged as a raw material, is 20% or more of the theoretical distillate volume, and in the case of a continuous reaction, a reactor in which the distillate volume as calculated from the amount of the monohydroxy compound distilled out of one reactor per unit time, based on the amount of the carbonic acid diester fed as a raw material per unit time, is 20% or more of the theoretical distillate volume.

The pressure in the transesterification reaction is preferably as follows:

1) when the distillate volume of the monohydroxy compound generated as a byproduct from the carbonic acid diester is less than 50% based on the total theoretical production amount of the monohydroxy compound,

a) the pressure is from 10 to 4 kPa at a temperature of 110°C to less than 130°C,
b) the pressure is from 14 to 6 kPa at a temperature of 130°C to less than 150°C,
c) the pressure is from 20 to 8 kPa at a temperature of 150°C to less than 170°C, and
d) the pressure is from 30 to 10 kPa at a temperature of 170°C to less than 190°C, and

2) when the distillate volume of the monohydroxy compound generated as a byproduct from the carbonic acid diester is 50% or more based on the total theoretical production amount of the monohydroxy compound,

a) the pressure is from 6 to 0.01 kPa at a temperature of 110°C to less than 130°C,
b) the pressure is from 8 to 0.01 kPa at a temperature of 130°C to less than 150°C,
c) the pressure is from 12 to 0.01 kPa at a temperature of 150°C to less than 170°C, and
(d) the pressure is from 16 to 0.01 kPa at a temperature of 170°C to less than 190°C.

The present invention is characterized in that the specific reactor is equipped with a reflux condenser so as to reduce the amount of monomers distilled out.

The temperature of the coolant introduced into the reflux condenser is, at the inlet of the reflux condenser, preferably from 45 to 180°C, more preferably from 80 to 150°C, still more preferably from 100 to 130°C. If the temperature of the coolant is too high, the reflux volume tends to be reduced, leading to a decrease in the effect, whereas if the temperature of the coolant is too low, the distillation efficiency of the monohydroxy compound that should be originally distilled out tends to decrease. As the coolant, for example, hot water, steam and a heat-medium oil is used, and steam and a heat medium oil are preferred.

The reflux condenser is preferably provided in the reactor so as to reduce the amount of monomers distilled out. In the case of performing the polycondensation reaction in multiple steps by using a plurality of reactors, the reflux condenser is preferably provided in a plurality of reactors among the reactors used.

In the method of the present invention, it is important that the total amount of monomers distilled out in all reaction steps is 15 wt% or less based on the gross weight of raw material monomers.

Here, the total amount of monomers distilled out in all reaction steps (hereinafter, sometimes referred to as "monomer distillate volume") is the total amount of the dihydroxy compound distilled out from the initiation to the end of the transesterification reaction and out of substances produced by the reaction of the dihydroxy compound with the carbonic acid diester, as for a substance containing a dihydroxy compound component (excluding hydrogen in the hydroxyl group moiety of the dihydroxy compound), the total amount indicates the amount including the weight of the substance, which is converted into the weight of the dihydroxy compound component and combined with the weight of the dihydroxy compound.

If the monomer distillate volume exceeds 15 wt% based on the gross weight of raw material monomers, there is a problem that not only the raw material consumption rate is reduced but also the terminal group concentration affecting the quality can be hardly controlled to a predetermined value, and in the case of using a plurality of dihydroxy compounds, the molar ratio of dihydroxy compounds used may change during the polymerization, failing in obtaining a polycarbonate polyol having a desired molecular weight or composition.

The monomer distillate volume is usually 15 wt% or less, preferably 10 wt% or less, more preferably 8 wt% or

less, still more preferably 5 wt% or less, yet still more preferably 3 wt% or less, based on the gross weight of raw material monomers.

As the monomer distillate volume is smaller, the raw material consumption rate is more improved, but on the other hand, in order to reduce the monomer distillate volume, it is necessary to excessively lower the internal temperature or the heating medium temperature, excessively raise the pressure, increase the catalyst amount, or prolong the polymerization time, which may cause reduction in the production efficiency of a polycarbonate polyol or deterioration of the quality. For this reason, the lower limit of the monomer distillate volume is usually 0.2 wt%, preferably 0.4 wt%, more preferably 0.6 wt%, still more preferably 1 wt%, yet still more preferably 2 wt%.

The monomer distillate volume specified in the present invention can be achieved, as described above, by appropriately selecting the kind and amount of the catalyst, the reaction solution temperature, the heating medium temperature, the reaction pressure, the residence time, the reflux conditions, and the like.

For example, while a prepolymer is obtained in the initial stage of polymerization at a relatively low temperature under relatively low vacuum, the molecular weight is increased to a predetermined value in the later stage of polymerization at a relatively high temperature under relatively high vacuum, and it is important to appropriately select the heating medium temperature, the internal temperature and the pressure inside the reaction system, at each molecular weight stage. For example, when either one of the temperature and the pressure is too early changed before the polymerization reaction reaches the predetermined value, an unreacted monomer may be distilled out to disrupt the molar ratio between the dihydroxy compound and the carbonic acid diester, leaving the possibility that the polymerization rate is reduced or a polymer having a desired molecular weight or terminal group is not obtained.

Selection of the kind and amount of the later-described catalyst is also important so that the final polycarbonate polyol can be prevented from deterioration of the hue, thermal stability, light resistance and the like while appropriately maintaining the polymerization rate and suppressing distillation out of monomers.

In the method of the present invention, the polymerization for producing a polycarbonate polyol is preferably performed in multiple steps by using a catalyst and preferably by using a plurality of reactors. The reason to perform the polymerization preferably by using a plurality of reactors is that: in the initial stage of polymerization reaction, the amount of a monomer contained in the reaction solution is large and therefore, it is important to suppress volatilization of the monomer while maintaining a necessary polymerization rate; and in the later stage of polymerization reaction, it is important to sufficiently distill out the byproduct monohydroxy compound so as to shift the equilibrium to the polymerization side. For thus setting different polymerization reaction conditions, use of a plurality of polymerization reactors arranged in series is preferred in view of production efficiency.

The number of reactors used in the method of the present invention is not particularly limited and may be sufficient if it is at least 2 or more, and in view of production efficiency and the like, the number of reactors is 3 or more, preferably from 3 to 5, more preferably 4.

In the present invention, when two or more reactors are used, for example, a plurality of reaction steps differing in the conditions may be further created among the reactors to stepwise or continuously change the temperature/pressure.

That is, the configuration above includes, for example, a case where two reactors are used and the polymerization is performed in two steps by changing the reaction conditions between the reactors, and a case where two reactors are used and polymerization is performed in three steps by providing two reaction steps differing in the conditions to the first reactor and creating single reaction conditions in the second reactor.

In the present invention, the later-described catalyst may be added to a raw material preparation tank or a raw material storage tank or may be added directly to a reactor, but in view of feed stability and polymerization control, the catalyst is preferably fed in the form of an aqueous solution by providing a catalyst feed line in the middle of a raw material line before the raw material is fed to a reactor.

If the transesterification reaction temperature is too low, this may lead to a decrease in the productivity or an increase of the heat history added to the product, whereas if the temperature is too high, not only volatilization of a monomer may be caused but also decomposition or coloration of the polycarbonate polyol may be promoted.

The internal temperature of the specific reactor having an internal volume of 20 L or more is, as described above, from 90 to 220°C, preferably from 100 to 210°C, more preferably from 110 to 200°C, still more preferably from 120 to 190°C, and most preferably from 130 to 180°C. As for other conditions, the reaction is performed under a pressure of usually from 110 to 1 kPa, preferably from 70 to 5 kPa, more preferably from 30 to 10 kPa (absolute pressure), for usually from 0.1 to 10 hours, preferably from 0.5 to 3 hours, while distilling out the generated monohydroxy compound to the outside of the reaction system.

The reaction in the second and subsequent steps is performed by gradually lowering the pressure of the reaction system from the pressure in the first step and finally setting the pressure (absolute pressure) of the reaction system to 1,500 Pa or less, preferably 1,000 Pa or less, at a maximum internal temperature of 120 to 220°C, preferably from 130 to 200°C, while removing the continuously generated monohydroxy compound out of the reaction system.

Above all, in order to prevent coloration or heat deterioration of the polycarbonate polyol and keeping the monomer distillate volume to 10 wt% or less based on the gross weight of raw material monomers, the maximum internal

temperature in all reaction steps is preferably less than 220°C, more preferably from 150 to 190°C. In the method of the present invention, in view of effective utilization of resources, the byproduct monohydroxy compound is preferably purified, if desired, and then reused as a raw material of a carbonic acid diester, a bisphenol compound or the like.

[Raw Material Compound for Production of Polycarbonate Polyol]

<Dihydroxy Compound>

As the dihydroxy compound used in the production method of the present invention, any dihydroxy compound may be used as long as it comes to have a structure represented by formula (A) resulting from polymerization with a carbonic acid diester. In formula (A), X is a divalent group having a carbon number of 1 to 20, which may have a heteroatom, and may contain either structure of a linear or branched chain group and a cyclic group. The number of carbons as an element constituting X is preferably 15 or less, more preferably 10 or less, still more preferably 6 or less. The heteroatom which may be contained in X is, for example, an oxygen atom, a sulfur atom, or a nitrogen atom, and in view of chemical stability, the heteroatom is preferably an oxygen atom. Specific examples of X include $-CH_2-$, $-CH_2CH_2-$, $-CH_2CH_2CH_2-$, $-CH_2CH(CH_3)CH_2-$, and $-CH_2CH(CH_3)CH_2-$, with $-CH_2-$ and $-CH_2CH_2-$ being preferred. According to the performance required of the obtained polycarbonate polyol, one of these dihydroxy compounds may be used alone, or two or more thereof may be used in combination.

Specific examples of the raw material dihydroxy compound used for the production of the polycarbonate polyol of the present invention are described in detail later, but the raw material dihydroxy compound for use in the present invention preferably contains a dihydroxy compound having a boiling point of 300°C or less at atmospheric pressure. This is because although a dihydroxy compound partially remaining after the completion of polymerization reaction is removed by thin-film distillation or the like in the later-described purification stage, if the boiling point is too high, the residual amount in the polycarbonate polyol may be increased and physical properties of, for example, a polyurethane produced using the polycarbonate polyol may be reduced. For this reason, the ratio of the dihydroxy compound having a boiling point of 300°C or less in all raw material dihydroxy compounds is preferably 15 wt% or more, more preferably from 50 to 100 wt%. Also, the boiling point of the dihydroxy compound having a boiling point of 300°C or less is preferably 280°C or less, more preferably 260°C or less. However, the boiling point of this dihydroxy compound is usually 190°C or more.

The dihydroxy compound for use in the production method of the present invention also preferably contains a dihydroxy compound (hereinafter, sometimes referred to as "dihydroxy compound (B)") having a structure represented by the following formula (B) (hereinafter, sometimes referred to as "structure (B)").

[Chem. 6]

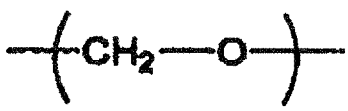

(B)

(wherein a case where the moiety represented by formula (B) is a part of $-CH_2-O-H$ is excluded).

In the case where the dihydroxy compound for use in the production method of the present invention contains the dihydroxy compound (B), the dihydroxy compound for use in the production method of the present invention may contain a compound that is construed as the dihydroxy compound (A) or the dihydroxy compound (B).

In the case where the polycarbonate polyol of the present invention is produced using such a dihydroxy compound, the dihydroxy compound may be arbitrarily classed as the dihydroxy compound (A) or the dihydroxy compound (B). However, when the specific dihydroxy compound is classed as the dihydroxy compound (A), the dihydroxy compound is not classed simultaneously as the dihydroxy compound (B), nor vice versa.

More specifically, the dihydroxy compound (B) includes oxyalkylene glycols such as diethylene glycol, triethylene glycol, tetraethylene glycol and polyethylene glycol, a compound having an aromatic group in the side chain and having, in the main chain, an ether group bonded to the aromatic group, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene

and 9,9-bis(4-(3-hydroxy-2,2-dimethylpropoxy)phenyl)fluorene, and a compound having a cyclic ether structure. Among compounds having a cyclic ether structure, a compound having a plurality of cyclic ether structures is preferred, and a compound having two cyclic ether structures is more preferred. The compound having a cyclic ether structure is, among others, preferably an anhydrous sugar alcohol typified by a dihydroxy compound represented by the following formula (D). According to the performance required of the obtained polycarbonate polyol, one of these compounds may be used alone, or two or more thereof may be used in combination.

[Chem. 7]

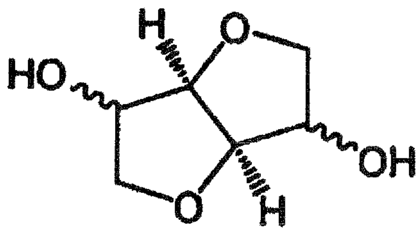

(D)

Among these dihydroxy compounds, in view of light resistance of the polyurethane obtained from the polycarbonate polyol, it is preferred to use a dihydroxy compound having no aromatic ring structure, and above all, isosorbide (hereinafter, sometimes simply referred to as ISB) obtained by dehydration condensation of sorbitol produced from various starches existing abundantly as a plant-derived resource and being easily available is most preferred from the aspects of ease of availability and production, light resistance, optical characteristics, moldability, heat resistance and carbon neutrality.

On the other hand, the dihydroxy compound having a structure represented by formula (B) is sometimes unstable and requires careful storage or use. For example, isosorbide is gradually oxidized in the presence of oxygen and therefore, in order to prevent decomposition by oxygen at the handling during storage or production, the important matter is to use a deoxidizer or create a nitrogen atmosphere. It is also necessary to avoid mixing of moisture. When isosorbide is oxidized, a decomposition product including formic acid is generated. For example, if a polycarbonate polyol is produced using isosorbide containing such a decomposition product, the obtained polycarbonate polyol may suffer from coloration or serious deterioration of its physical properties. Also, the decomposition product may affect the polymerization reaction, leading to a failure in obtaining a polymer having a desired molecular weight.

As a countermeasure against these, a method described in known documents may be arbitrarily employed. For example, in JP-A-2009-161745, a preferred amount of formic acid contained in the raw material dihydroxy compound such as isosorbide used at the production of a polycarbonate is specified, and it is suggested that when a dihydroxy compound in an amount of not more than the specified amount is used, a polycarbonate having good physical properties is obtained.

This is true also for the production of the polycarbonate polyol according to the present invention, and although the amount of formic acid contained in the dihydroxy compound having a structure represented by formula (B) used is not particularly limited, the upper limit is usually 20 ppm, preferably 10 ppm, more preferably 5 ppm, and the lower limit is 0.1 ppm, preferably 1 ppm.

Furthermore, when the dihydroxy compound having a structure represented by formula (B) is oxidatively deteriorated, an acidic substance such as formic acid is sometimes produced and in turn, the pH tends to drop. Therefore, pH may be also used as an index when evaluating the dihydroxy compound having a structure represented by formula (B). For example, there may be employed a method described in International Publication No. 2009/057609, that is, a method of preparing a 40% aqueous solution of a dihydroxy compound and measuring the pH by a pH meter.

The lower limit of pH of the 40% aqueous solution of a dihydroxy compound having a structure represented by formula (B), which is necessary for producing the polycarbonate polyol according to the present invention, is not particularly limited but is usually 3, preferably pH 4, more preferably pH 5, and the upper limit is pH 11, preferably pH 10.

The dihydroxy compound having a structure represented by formula (B) generates a peroxide upon oxidative deterioration. This peroxide may give rise to coloration during production of a polycarbonate polyol or urethanation reaction and therefore, the amount of the peroxide is preferably smaller. The amount of the peroxide in the dihydroxy compound having a structure represented by formula (B) is usually 10 ppm or less, preferably 5 ppm or less, more preferably 3 ppm or less, still more preferably 1 ppm or less, based on the weight of the dihydroxy compound having a structure represented by formula (B). The lower limit is not particularly limited but is usually 0.01 ppm or more.

A compound of a Group 1 metal of the long-form periodic table in Nomenclature of Inorganic Chemistry IUPAC Recommendations 2005 (hereinafter, sometimes simply referred to as "periodic table") and/or a Group 2 metal of the

periodic table, when contained in the dihydroxy compound having a structure represented by formula (B), may affect the reaction speed at the polycarbonate-forming reaction or further at the polyurethanation of the obtained polycarbonate polyol. Therefore, the content of the compound of a periodic table Group 1 metal and/or a periodic table Group 2 metal in the dihydroxy compound having a structure represented by formula (B) is preferably smaller, though this is not particularly limited, and the upper limit is, in terms of the ratio of the metal weight to the weight of the dihydroxy compound having a structure represented by formula (B), is usually 10 ppm, preferably 5 ppm, more preferably 3 ppm, still more preferably 1 ppm. Above all, it is preferred to contain absolutely no compound of a periodic table Group 1 metal and/or a periodic table Group 2 metal.

A halogen component such as chloride ion and bromide ion, when contained in the dihydroxy compound having a structure represented by formula (B), may affect the polycarbonate-forming reaction or the reaction at the polyurethanation of the obtained polycarbonate polyol or may give rise to coloration, and therefore, the content of the halogen component is preferably smaller. The upper limit of the content of a halogen component in the dihydroxy compound having a structure represented by formula (B) is, in terms of halogen content, usually 10 ppm, preferably 5 ppm, more preferably 1 ppm, based on the weight of the dihydroxy compound having a structure represented by formula (B).

The dihydroxy compound having a structure represented by formula (B), which is deteriorated by oxidation or the like or contains the above-described impurity, can be purified, for example, by distillation and therefore, a dihydroxy compound in which the impurity content is reduced to the range above by performing distillation before use in the polymerization can be used. Addition of a stabilizer is also useful so as to prevent the compound from again undergoing oxidative deterioration after distillation. As the specific stabilizer, those used usually and commonly as an antioxidant for an organic compound can be used without limitation, and examples thereof include a phenolic stabilizer such as butylhydroxytoluene, butylhydroxyanisole, 2,6-di-tert-butyl-4-methylphenol and 2-[1-(2-hydroxy-3,5-di-tert-pentylphenyl)ethyl]-6-di-tert-pentylphenyl acrylate (produced by Sumitomo Chemical Co., Ltd., trade name: Sumilizer (registered trademark) GS), and a phosphorus-based stabilizer such as 6-[3-(3-tert-butyl-4-hydroxy-5-methylphenyl)propoxy]-2,4,8,10-tetra-tert-butyldibenz[d,f][1,3 ,2]dioxaphosphepin (produced by Sumitomo Chemical Co., Ltd., trade name: Sumilizer (registered trademark) GP) and bis(2,4-di-tert-butylphenyl)pentaerythritol diphosphite.

Also, the dihydroxy compound for use in the production method of the present invention preferably contains a dihydroxy compound represented by the following formula (C) (hereinafter, sometimes referred to as "dihydroxy compound (C)"):

[Chem. 8]

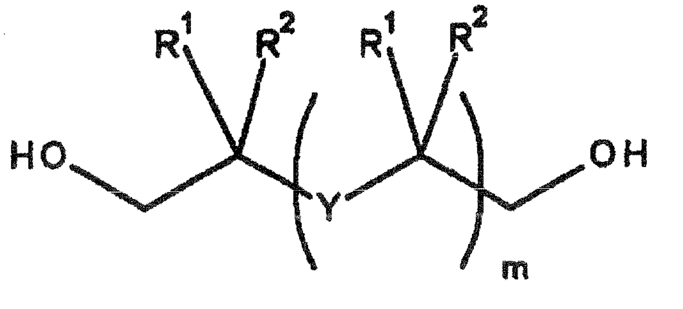

(C)

(wherein m is 0 or 1, each of $R^1$ and $R^2$ is independently a group having a carbon number of 1 to 15 selected from the group consisting of an alkyl group, an aryl group, an alkenyl group, an alkynyl group and an alkoxy group and may contain, within the carbon number range above, an oxygen atom, a sulfur atom, a nitrogen atom, a halogen atom or a substituent containing such an atom, and Y represents a divalent group having a carbon number of 1 to 20, which may contain a heteroatom).

In formula (C), Y is not particularly limited in terms of obtaining the effects of the present invention and may be either structure of a chain group and a cyclic group, but the number of carbons as an element constituting such a group is from 1 to 20, preferably 15 or less, more preferably 10 or less, and a heteroatom such as oxygen atom, sulfur atom and nitrogen atom may be contained. Y is preferably a divalent group not containing a quaternary carbon atom and having a carbon number of 1 to 20, preferably from 1 to 15, or a divalent group having a carbon number of 5 to 20, preferably from 5 to 15, in which at least the carbon atom bonded to oxygen in Y and the carbon atom bonded to that carbon atom are not a quaternary carbon atom. Specific examples of Y include $-CH_2-$, $-CH_2CH_2-$, $-CH_2CH_2CH_2-$, $-CH_2CH(CH_3)CH_2-$, and $-CH_2CH(CH_3)CH_2-$, with $-CH_2-$ and $-CH_2CH_2-$ being preferred.

$R^1$ and $R^2$ may be different groups independently of each other or may be the same group. The carbon number of these substituents must be 1 or more so as to bring out the effects of the present invention. However, if the carbon

number is too large, there arises a problem such as reduction in the polymerization reactivity, and therefor, the carbon number is 15 or less, preferably 10 or less. Examples of the alkyl group above include a methyl group, an ethyl group, an i-propyl group, an n-propyl group, an n-butyl group, an i-butyl group, a tert-butyl group, a pentyl group, a hexyl group, a heptyl group, an octyl group, and a nonyl group, and, for example, a methyl group, an ethyl group, an n-propyl group, an n-butyl group, and a pentyl group are preferred.

Examples of the aryl group above include a phenyl group, a naphthyl group, a benzyl group, a tolyl group, and an o-xylyl group.

Examples of the alkenyl group include a vinyl group (ethylenyl), a propenyl group, a butenyl group, and a pentenyl group, and, for example, a vinyl group and a propenyl group are preferred.

Examples of the alkynyl group above include an ethynyl group, a propynyl group, a butynyl group, and a pentynyl group, and, for example, an ethynyl group and a propynyl group are preferred.

Examples of the alkoxy group above include a methoxy group, an ethoxy group, an n-propoxy group, an i-propoxy group, and an n-butoxy group, and among these, for example, a methoxy group, an ethoxy group, and an n-propoxy group are preferred.

The substituent which may be substituted on these alkyl group, aryl group, alkenyl group, alkynyl group and alkoxy group includes, for example, a nitrile group, a nitro group, an amino group, an amido group, a methoxy group, an ethoxy group, an n-propoxy group, an i-propoxy group, an n-butoxy group, a mercapto group, and a halogen atom and is preferably a nitro group, a halogen atom or the like. Specific examples of the halogen atom include a fluorine atom, a chlorine atom, a bromine atom, and an iodine atom.

The dihydroxy compound (C) for use in the production method of the present invention more specifically includes terminal dihydroxy compounds of a linear hydrocarbon, such as ethylene glycol, 1,3-propanediol, 1,4-butanediol, 1,5-pentanediol, 1,6-hexanediol (hereinafter, sometimes simply referred to as 16HD), 1,7-heptanediol, 1,8-octanediol, 1,9-nonanediol, 1,10-decanediol, 1,11-undecanediol and 1,12-dodecanediol; chain dihydroxy compounds having an ether group, such as diethylene glycol, triethylene glycol, tetraethylene glycol, pentaethylene glycol, polyethylene glycol, polypropylene glycol and polytetramethylene glycol; thioether diols such as bishydroxyethyl thioether; dihydroxy compounds having a branched chain, such as 2-methyl-1,3-propanediol, 2-ethyl-1,3-propanediol, 2-butyl-1,3-propanediol, 2,2-dimethyl-1,3-propanediol (hereinafter, referred to as "neopentyl glycol" and sometimes simply referred to as "NPG"), 2-ethyl-2-butyl-1,3-propanediol, 2,2-diethyl-1,3-propanediol, 2-pentyl-2-propyl-1,3-propanediol, 3-methyl-1,5-pentanediol, 3,3-dimethyl-1,5-pentanediol, 2,2,4,4-tetramethyl-1,5-pentanediol, 2-ethyl-1,6-hexanediol and 2,2,9,9-tetramethyl-1,10-decanediol; dihydroxy compounds having an alicyclic structure, such as 1,3-cyclohexanediol, 1,4-cyclohexanediol, 1,4-cyclohexanedimethanol, 4,4-dicyclohexyldimethyl-methanediol, 2,2'-bis(4-hydroxycyclohexyl)propane, 1,4-dihydroxyethylcyclohexane, 4,4'-isopropylidenedicyclohexanol, 4,4'-isopropylidenebis(2,2'-hydroxyethoxycyclohexane) and norbornane-2,3-dimethanol; dihydroxy compounds having a cyclic group containing a heteroatom in the ring, such as 2,5-bis(hydroxymethyl)tetrahydrofuran, 3,4-dihydroxytetrahydrofuran, 3,9-bis(1,1-dimethyl-2-hydroxyethyl)-2,4,8,10-tetraoxaspiro[5.5]undecane (cas number: 1455-42-1) and 2-(5-ethyl-5-hydroxymethyl-1,3-dioxan-2-yl)-2-methylpropan-1-ol (cas number: 59802-10-7); nitrogen-containing dihydroxy compounds such as diethanolamine and N-methyl-diethanolamine; and sulfur-containing dihydroxy compounds such as bis(hydroxyethyl)sulfide.

Among these dihydroxy compounds, in view of industrial availability and excellent physical properties of the obtained polycarbonate polyol and polyurethane, preferred dihydroxy compounds are a terminal dihydroxy compound of a linear hydrocarbon, such as ethylene glycol, 1,3-propanediol, 1,4-butanediol, 1,5-pentanediol, 1,6-hexanediol and 1,7-heptanediol; a chain dihydroxy compound having an ether group, such as diethylene glycol, triethylene glycol, tetraethylene glycol, polypropylene glycol and polytetramethylene glycol; a dihydroxy compound having a branched chain, such as 2-methyl-1,3-propanediol, 2-ethyl-1,3-propanediol, 2,2-dimethyl-1,3-propanediol, 2-ethyl-2-butyl-1,3-propanediol, 2,2-diethyl-1,3-propanediol, 3-methyl-1,5-pentanediol, 3,3-dimethyl-1,5-pentanediol, 2,2,4,4-tetramethyl-1,5-pentanediol and 2-ethyl-1,6-hexanediol; a dihydroxy compound having an alicyclic structure, such as 1,3-cyclohexanediol, 1,4-cyclohexanediol, 1,4-cyclohexanedimethanol, 4,4-dicyclohexyldimethylmethane diol, 2,2'-bis(4-hydroxycyclohexyl)propane, 4,4'-isopropylidenedicyclohexanol and norbornane-2,3-dimethanol; and a dihydroxy compound having a cyclic group containing a heteroatom in the ring, such as 3,4-dihydroxytetrahydrofuran, 3,9-bis(1,1-dimethyl-2-hydroxyethyl)-2,4,8,10-tetraoxaspiro[5.5]undecane (cas number: 1455-42-1), 2-(5-ethyl-5-hydroxymethyl-1,3-dioxan-2-yl)-2-methylpropan-1-ol (cas number: 59802-10-7). In particular, out of these dihydroxy compounds, when a terminal dihydroxy compound of a linear hydrocarbon or an aliphatic dihydroxy compound such as dihydroxy compounds having a branched chain is used, there is advantageously obtained an effect that the polycarbonate polyol is liquid and easily handleable and in the case of producing a polyurethane by using the polycarbonate polyol as a raw material, the flexibility and elastic recovery property of the polyurethane can be improved. One of these dihydroxy compounds may be used alone, or two or more thereof may be used in combination.

<Carbonic Acid Diester>

The carbonic acid diester which can be used is not limited as long as the effects of the present invention are not lost, but includes an alkyl carbonate, an aryl carbonate, and an alkylene carbonate. Among these, use of an aryl carbonate is advantageous in that the reaction swiftly proceeds. However, on the other hand, when an alkyl carbonate is used as a raw material, phenols having a high boiling point is generated as a byproduct. The residual amount of phenols in the polycarbonate polyol product is preferably smaller, because phenols are a monofunctional compound, leaving the possibility of becoming a polymerization inhibitor at the polyurethanation, and moreover, are an irritating substance.
Specific examples of the dialkyl carbonate, diaryl carbonate and alkylene carbonate which are a carbonic acid diester usable for the production of the polycarbonate polyol according to the present invention are as follows.
Examples of the dialkyl carbonate include dimethyl carbonate, diethyl carbonate, dibutyl carbonate, dicyclohexyl carbonate, diisobutyl carbonate, ethyl-n-butyl carbonate, and ethyl-isobutyl carbonate, with dimethyl carbonate and diethyl carbonate being preferred.
Examples of the diaryl carbonate include diphenyl carbonate, ditolyl carbonate, bis(chlorophenyl) carbonate, and di-m-cresyl carbonate, with diphenyl carbonate being preferred.
Examples of the alkylene carbonate include ethylene carbonate, trimethylene carbonate, tetramethylene carbonate, 1,2-propylene carbonate, 1,2-butylene carbonate, 1,3-butylene carbonate, 2,3-butylene carbonate, 1,2-pentylene carbonate, 1,3-pentylene carbonate, 1,4-pentylene carbonate, 1,5-pentylene carbonate, 2,3-pentylene carbonate, 2,4-pentylene carbonate, and neopentyl carbonate, with ethylene carbonate being preferred.
One of these may be used alone, or two or more thereof may be used in combination.
Among these, a diaryl carbonate is preferred because of its high reactivity enabling efficient industrial production, and above all, diphenyl carbonate is easily and inexpensively available as an industrial raw material and is more preferred.

[Physical Properties of Polycarbonate Polyol]

<Molecular Weight•Molecular Weight Distribution>

The lower limit of the number average molecular weight (Mn) of the polycarbonate polyol produced by the production method of a polycarbonate polyol of the present invention (hereinafter, sometimes referred to as "the polycarbonate polyol of the present invention") is usually 250, preferably 500, more preferably 700, still more preferably 1,000. On the other hand, the upper limit is usually 5,000, preferably 4,000, more preferably 3,000. If the number average molecular weight of the polycarbonate polyol is less than the lower limit above, the polyurethane obtained cannot have sufficient hardness, whereas if the number average molecular weight exceeds the upper limit above, the viscosity is increased to pose a problem in the handling at the polyurethanation.
The molecular weight distribution (Mw/Mn) of the polycarbonate polyol according to the present invention is not particularly limited, but the lower limit is usually 1.5, preferably 1.7, more preferably 2.0, and the upper limit is usually 3.5, preferably 3.0.
If the molecular weight distribution exceeds the range above, the physical properties of the polyurethane produced using this polycarbonate polyol tend to be deteriorated, for example, the polyurethane is hardened at low temperatures or exhibits poor elongation, whereas for producing a polycarbonate polyol of which molecular weight distribution is less than the range above, a high-level purification operation such as oligomer removal may be required.
Here, Mw is the weight average molecular weight, and Mn is the number average molecular weight, which can be usually determined by gel permeation chromatography (GPC) measurement. Mn can be also calculated from the OH value of the polyol when measurement by gel permeation chromatography (GPC) is difficult. In addition, measurement by $^1$H-NMR may be also possible.

• Measurement of Number Average Molecular Weight by GPC

Using GPC ("HLC-8120 GPC" manufactured by Tosoh Corporation), the number average molecular weight is measured at a liquid feed rate of 0.5 $cm^3$/min and a column oven temperature of 40°C by using tetrahydrofuran as the solvent, polystyrene as the standard sample, and TSK gel superH1000+H2000+H3000 as the column.

• Calculation of Number Average Molecular Weight of Polyol from OH Value

The number average molecular weight is calculated by the acetylation method described in JIS K1557-1 (2007).

<Proportion•Hydroxyl Value of Terminal Alkyloxy Group or Aryloxy Group>

As regards the polycarbonate polyol according to the present invention, the terminal structure of the polymer is basically a hydroxyl group. However, in the polycarbonate polyol product obtained by the reaction of a dihydroxy compound with a carbonic acid diester, a structure where the polymer terminal is not a hydroxyl group is sometimes partially present as an impurity. Specific examples of the structure include those where the molecular chain terminal is an alkyloxy group or an aryloxy group, most of which are a structure derived from a carbonic acid diester. The proportion of the alkyloxy group or aryloxy group is usually calculated by $^1$H-NMR.

For example, in the case of using diphenyl carbonate as the carbonic acid diester, a phenoxy group (PhO-) may remain as an aryloxy group; in the case of using dimethyl carbonate, a methoxy group (MeO-) may remain as an alkyloxy group; in the case of using diethyl carbonate, an ethoxy group (EtO-) may remain; and in the case of using ethylene carbonate, a hydroxyethoxy group ($HOCH_2CH_2O$-) may remain as a terminal group (wherein Ph stands for a phenyl group, Me stands for a methyl group, and Et stands for an ethyl group).

In the present invention, the proportion of the structure where the molecular chain terminal contained in the polycarbonate polyol product is an alkyloxy group or an aryloxy group is, in terms of the number of terminal groups, 5 mol% or less, preferably 3 mol% or less, more preferably 1 mol% or less, based on the number of all terminals. The lower limit of the proportion in terms of the number of terminal groups when the molecular chain terminal is an alkyloxy group or an aryloxy group is not particularly limited and is usually 0.01 mol%, preferably 0.001 mol%, and most preferably 0 mol%. If the proportion of the alkyloxy or aryloxy terminal group is large, a problem may arise, for example, the polymerization degree may not be increased when performing a polyurethanation reaction.

The polycarbonate polyol according to the present invention has a structure where, as described above, the proportion in terms of the number of terminal groups when the molecular chain terminal is an alkyloxy group or an aryloxy group is 5% or less and where both terminal groups of the molecular chain are basically a hydroxyl group and the hydroxyl group can react with isocyanate at the polyurethanation reaction.

The hydroxyl value of the polycarbonate polyol according to the present invention is not particularly limited, but the lower limit is usually 10 mg-KOH/g, preferably 20 mg-KOH/g, more preferably 35 mg-KOH/g, and the upper limit is usually 400 mg-KOH/g, preferably 300 mg-KOH/g, more preferably 200 mg-KOH/g. If the hydroxyl value is less than the lower limit above, the viscosity may be too much increased to make the handling difficult at the polyurethanation, whereas if the hydroxyl value exceeds the upper limit above, the polyurethane formed may lack the strength or hardness.

<Ether Structure>

The polycarbonate polyol according to the present invention is based on a structure where a dihydroxy compound is polymerized by a carbonate group. However, depending on the production method, an ether structure formed by a dehydration reaction of the dihydroxy compound may be mixed, other than an ether structure in the dihydroxy group, and when the abundance of the ether structure becomes large, the weather resistance or heat resistance may be reduced. Therefore, the polycarbonate polyol is preferably produced such that the proportion of an ether structure is not increased excessively.

In terms of ensuring the characteristics such as weather resistance and heat resistance by reducing the proportion of an ether structure other than the structure (A) in the polycarbonate polyol, although this is not particularly limited, the ratio between an ether bond other than the structure (A) and a carbonate bond contained in the molecular chain of the polycarbonate polyol according to the present invention is, in terms of the molar ratio, usually 2/98 or less, preferably 1/99 or less, more preferably 0.5/99.5 or less.

In the case where the dihydroxy compound (B) used for the production of the polycarbonate polyol also contains an ether bond, the polycarbonate polyol is preferably produced such that the proportion of an ether structure other than the structure (A) and the structure (B) is not increased excessively. At this time, the ratio between an ether bond other than the structure (A) and the structure (B) and a carbonate bond contained in the molecular chain of the polycarbonate polyol according to the present invention is not particularly limited but is, in terms of the molar ratio, usually 2/98 or less, preferably 1/99 or less, more preferably 0.5/99.5 or less.

<Viscosity•Solvent Solubility>

The polycarbonate polyol according to the present invention usually shows a property of a liquid-like to wax-like solid around room temperature but when heated, can be reduced in the viscosity and becomes easy to handle. Also, the polycarbonate polyol can be dissolved in an amide-based solvent such as dimethylformamide and dimethylacetamide, an ester-based solvent such as γ-butyrolactone, or a sulfoxide-based solvent such as dimethyl sulfoxide, and this sometimes facilitates the transportation or reaction.

The property of the polycarbonate polyol according to the present invention is usually, as described above, a

liquid-like to wax-like solid around room temperature, and its property varies according to the temperature. When the property is expressed, for example, by the viscosity, the lower limit of the viscosity at 40°C of the polycarbonate polyol according to the present invention is preferably 0.1 Pa•s, more preferably 1 Pa•s, still more preferably 5 Pa•s, and the upper limit is preferably 10 kPa•s, more preferably 1.0 kPa•s, still more preferably 500 Pa•s.

<APHA Value>

The color of the polycarbonate polyol according to the present invention is preferably kept in the range not affecting the color tone of the obtained polyurethane, and the value (hereinafter, referred to as "APHA value") of the coloration degree when expressed by the Hazen color number (in accordance with JIS K0071-1 (1998)) is not particularly limited but is preferably 100 or less, more preferably 80 or less, still more preferably 50 or less.

<Turbidity>

The turbidity of the polycarbonate polyol of the present invention is a value determined using an integrating sphere turbidimeter, PT-200, manufactured by Mitsubishi Chemical Corporation by putting a 50% methylene chloride solution of the polycarbonate polyol in a 10-mm cell and measuring the turbidity with use of a polystyrene calibration curve previously installed in the device and is preferably 2.0 ppm or less, more preferably 1.0 ppm or less, still more preferably 0.5 ppm or less. If the turbidity exceeds 2.0 ppm, the polyurethane obtained using the polycarbonate polyol as a raw material may be deteriorated in the transparency, resulting in lowering the commercial value or reducing the mechanical properties. The turbidity is considered to be caused mainly by the deactivation•precipitation of a catalyst component or the production of a cyclic oligomer or the like having low solubility, and in order to reduce the turbidity, it is necessary to select the kind or amount of the catalyst at the production of the polycarbonate polyol and comprehensively control the heat history, the monohydroxy compound concentration during polymerization as well as after the completion of polymerization, and the unreacted monomer concentration. For example, when the solubility of the catalyst itself in polycarbonate diol is low, precipitation of the catalyst is likely to occur and when the concentration is high, precipitation is promoted. On the other hand, for suppressing the production of a cyclic oligomer poor in the solubility, selection or combination of dihydroxy compounds as monomers is important. For example, in the case of a homopolymer, a cyclic oligomer tends to be easily produced, but copolymerization when applied makes it difficult to take a stable cyclic structure and in turn, the turbidity is liable to drop. Also, when the temperature at the production of the polycarbonate polyol is high, a cyclic oligomer is likely to be produced thermodynamically, and therefore, it is effective to lower the polymerization temperature. However, too much lowering of the polymerization temperature is not preferred, because a trouble may arise in the productivity or the polymerization may take excessive time, resulting in deteriorating the tone of color or worsening the turbidity.

<Impurity Content>

• Phenols

The content of phenols in the polycarbonate polyol according to the present invention is not particularly limited but is preferably smaller and is preferably 0.1 wt% or less, more preferably 0.01 wt% or less, still more preferably 0.001 wt% or less, because phenols are a monofunctional compound, leaving the possibility of becoming a polymerization inhibitor at the polyurethanation, and moreover, are an irritating substance.

• Carbonic Acid Diester

In the polycarbonate polyol product according to the present invention, a carbonic acid diester used as a raw material at the production sometimes remains, and the residual amount of the carbonic acid diester in the polycarbonate polyol according to the present invention is not limited but is preferably smaller. The upper limit is usually 5 wt%, preferably 3 wt%, more preferably 1 wt%. If the carbonic acid diester content in the polycarbonate polyol is too large, the carbonic acid diester may inhibit the reaction at the polyurethanation. On the other hand, the lower limit is not particularly limited and is 0.1 wt%, preferably 0.01 wt%, more preferably 0 wt%.

• Dihydroxy Compound

In the polycarbonate polyol according to the present invention, a dihydroxy compound used at the production sometimes remains, and the residual amount of the dihydroxy compound in the polycarbonate polyol according to the present invention is not limited but is preferably smaller and is usually 10 wt% or less, preferably 5 wt% or less, more

preferably 3 wt% or less, still more preferably 1 wt% or less, yet still more preferably 0.1 wt% or less, even yet still more preferably 0.05 wt% or less. In the case where at least one dihydroxy compound selected from isosorbide, isomannide and isoidide (hereinafter, sometimes simply referred to as "isosorbides") is used as the dihydroxy compound, the residual amount of isosorbides in the polycarbonate polyol is preferably smaller and is usually 10 wt% or less, preferably 5 wt% or less, more preferably 3 wt% or less, still more preferably 1 wt% or less, yet still more preferably 0.1 wt% or less, and most preferably 0.01 wt% or less. If the residual amount of the dihydroxy compound in the polycarbonate polyol is large, the polyurethane formed may lack the molecular length of the soft segment moiety and may not have desired physical properties.

Incidentally, the dihydroxy compound that was a raw material of the polycarbonate polyol can be identified by NMR measurement of a polycarbonate polyol product, NMR measurement or GC and LC measurements of an unreacted dihydroxy compound contained in the product, and in the case where an unreacted product remains, the carbonic acid diester can be identified by NMR measurement or GC and LC measurements. In addition, the structure of the carbonic acid diester that was a raw material may be also estimated by identifying an impurity such as alcohol component generated as a byproduct during the reaction of the carbonic acid diester by NMR measurement or GC and LC measurements of the product.

• Transesterification Catalyst

In producing the polycarbonate polyol according to the present invention, as described later, a transesterification catalyst may be used, if desired, so as to accelerate the polymerization. In this case, the catalyst sometimes remains in the obtained polycarbonate polyol, and if the catalyst remains in an excessively large amount, the reaction during the polyurethanation reaction may become difficult to control, and the polyurethanation reaction may be accelerated more than expected to cause gelation, failing in obtaining a uniform polyurethane. Therefore, no remaining of the catalyst is preferred.

The upper limit of the amount of the catalyst remaining in the polycarbonate polyol is not particularly limited but in view of obtaining a homogeneous polyurethane from this polycarbonate polyol, the upper limit is, as the content in terms of catalyst metal, usually 100 ppm by weight, preferably 50 ppm by weight, more preferably 30 ppm by weight, still more preferably 10 ppm by weight. As for the kind of the remaining metal, the metal includes a metal of the later-described catalytic activity component having a transesterification ability.

Also, the lower limit of the amount of the catalyst remaining in the polycarbonate polyol is not particularly limited but is, as the content in terms of catalyst metal, usually 0.01 ppm by weight, preferably 0.1 ppm by weight, more preferably 1 ppm by weight, still more preferably 5 ppm by weight. The catalyst used when producing a polycarbonate polyol is usually difficult to remove after the production, and it is difficult in many cases to control the residual catalyst amount to be less than the lower limit value of the later-described amount used.

The amount of the above-described catalyst in the polycarbonate polyol can be adjusted by the amount used of the catalyst for use in the production or, for example, by catalyst isolation through filtration or the like of the product or catalyst extraction using a solvent such as water.

• Cyclic Carbonate

In the polycarbonate polyol product, a cyclic carbonate generated as a byproduct during the production is sometimes contained. For example, in the case where at least one dihydroxy compound selected from dihydroxy compounds having a 1,3-propanediol skeleton (hereinafter, sometimes simply referred to as "1.3-propanediols"), such as neopentyl glycol, is used as the dihydroxy compound, 5.5-dialkyl-1,3-dioxan-2-one or a cyclic carbonate composed of two or more molecules thereof may be produced as a cyclic compound and contained in the polycarbonate polyol. Such a cyclic compound is an undesirable impurity having a possibility of not reacting with an isocyanate group in the urethanation reaction or bringing about a side reaction under heating and having a possibility of remaining like a plasticizer in the polyurethane to cause a trouble in the final product or the like, and therefore, it is preferred to remove the cyclic compound as much as possible at the production stage.

The content of the cyclic compound contained in the polycarbonate polyol is preferably 5 wt% or less, more preferably 3 wt% or less, still more preferably 1 wt% or less, yet still more preferably 0.5 wt% or less.

<Urethanation Reaction Rate>

The reaction rate in the urethanation reaction of the polycarbonate polyol according to the present invention can be evaluated as a load value [V] of a motor after making an N,N-dimethylformamide solution of the polycarbonate polyol, adding a diphenylmethane diisocyanate in an amount of 0.98 times the molar equivalent of the polycarbonate polyol, and stirring the mixture at 100 rpm for a predetermined time by using the motor as a power source. The lower

limit of the motor load value 30 minutes after the addition of diphenylmethane diisocyanate is usually 0.10 V, preferably 0.13 V, more preferably 0.20 V, and the upper limit is usually 2.00 V, preferably 1.95 V, more preferably 1.90 V. Also, the lower limit of the motor load value 60 minutes after the addition of diphenylmethane diisocyanate is usually 0.10 V, preferably 0.13 V, more preferably 0.20 V, and the upper limit is usually 2.00 V, preferably 1.95 V, more preferably 1.90 V. If the motor load value is less than the lower limit above, the polymerization is unlikely to proceed any more, whereas if the motor load value exceeds the upper limit above, the product tends to have a very high molecular weight or be gelled.

Similarly, the lower limit of the time [minutes] until the motor load value reaches 0.7 V is usually 8 minutes, preferably 10 minutes, more preferably 15 minutes, and the upper limit is usually 240 minutes, preferably 200 minutes, more preferably 120 minutes. Also, the lower limit of the time [minutes] until the motor load value reaches 1.0 V is usually 2 minutes, preferably 5 minutes, more preferably 10 minutes, and the upper limit is usually 120 minutes, preferably 90 minutes, more preferably 60 minutes. If the time is less than the lower limit above, the product tends to have a very high molecular weight or be gelled, and if the time exceeds the upper limit above, the polymerization is unlikely to proceed any more.

Incidentally, the motor load value [V] can be determined from the difference between the motor load value when stirring an N,N-dimethylformamide solution of the polycarbonate polyol at 100 rpm and the motor load value after adding diphenylmethane diisocyanate and stirring the mixture at 100 rpm for a predetermined time. Here, the measurement may be performed under the conditions of nitrogen flow or nitrogen sealing by using a motor having a rotation speed of approximately from 10 to 600 rpm, in which the maximum torque at a maximum rotation speed of about 600 rpm is about 0.49 N•m and a motor load value of 0 to about 5 V can be output, using a 500 mL-volume separable flask as the reactor, and using four blades including a combination of two anchor-type blades as the stirring blade.

[Production Method of Polycarbonate Polyol]

The polycarbonate polyol of the present invention can be produced by causing a transesterification reaction between a dihydroxy compound capable of giving the structure (A), preferably a dihydroxy compound such as dihydroxy compound (B) typified by isosorbide and/or dihydroxy compound (C), and the above-described carbonic acid diester with use of a transesterification catalyst.

For example, the polycarbonate polyol can be produced by reacting (i) at least one dihydroxy compound selected from isosorbide, isomannide and isoidide, (ii) a dihydroxy compound having a carbon number of 1 to 15, which may contain a heteroatom, and (iii) a carbonic acid diester in the presence of a transesterification catalyst.

This production method is described below.

<Transesterification Catalyst>

For the metal usable as the transesterification catalyst, a metal generally considered to have a transesterification ability may be used without limitation.

Examples of the catalyst metal include a periodic table Group 1 metal such as lithium, sodium, potassium, rubidium and cesium; a periodic table Group 2 metal such as magnesium, calcium, strontium and barium; a periodic table Group 4 metal such as titanium and zirconium; a periodic table Group 5 metal such as hafnium; a periodic table Group 9 metal such as cobalt; a periodic table Group 12 metal such as zinc; a periodic table Group 13 metal such as aluminum; a periodic table Group 14 metal such as germanium, tin and lead; a periodic table Group 15 metal such as antimony, bismuth; and a lanthanide series metal such as lanthanum, cerium, europium and ytterbium. Among these, from the standpoint of raising the transesterification reaction rate, a periodic table Group 1 metal, a periodic table Group 2 metal, a periodic table Group 4 metal, a periodic table Group 5 metal, a periodic table Group 9 metal, a periodic table Group 12 metal, a periodic table Group 13 metal, and a periodic table Group 14 metal are preferred; a periodic table Group 1 metal and a periodic table Group 2 metal are more preferred; and a periodic table Group 2 metal is still more preferred. Among the periodic table Group 1 metals, lithium, potassium and sodium are preferred; lithium and sodium are more preferred; and sodium is still more preferred. Among the periodic table Group 2 metals, magnesium, calcium and barium are preferred; calcium and magnesium are more preferred; and magnesium is still more preferred. These metals are sometimes used as a simple metal or sometimes used as a metal compound such as hydroxide and salt. In the case of using the metal as a salt, examples of the salt include a halide salt such as chloride, bromide and iodide; a carboxylate salt such as acetate, formate and benzoate; a sulfonate salt such as methanesulfonate, toluenesulfonate and trifluoromethanesulfonate; a phosphorus-containing salt such as phosphate, hydrogenphosphate and dihydrogenphosphate; and an acetylacetonate salt. Furthermore, the catalyst metal may be also used as an alkoxide such as methoxide and ethoxide.

Among these, an acetate, a nitrate, a sulfate, a carbonate, a phosphate, a hydroxide, a halide, and an alkoxide of a periodic table Group 1 metal, a periodic table Group 2 metal, a periodic table Group 4 metal, a periodic table Group 5 metal, a periodic table Group 9 metal, a periodic table Group 12 metal, a periodic table Group 13 metal and a periodic

table Group 14 metal are preferably used; an acetate, a carbonate and a hydroxide of a periodic table Group 1 metal and a periodic table Group 2 metal are more preferably used; and a periodic table Group 2 metal such as magnesium and calcium, particularly an acetate of the metal, is still more preferably used.

One of these metals and metal compounds may be used alone, or two or more thereof may be used in combination.

Specific examples of compounds using a periodic table Group 1 metal of the transesterification catalyst include sodium hydroxide, potassium hydroxide, cesium hydroxide, lithium hydroxide, sodium hydrogencarbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium borophenylate, sodium benzoate, potassium benzoate, cesium benzoate, lithium benzoate, disodium hydrogenphosphate, dipotassium hydrogenphosphate, dilithium hydrogenphosphate, disodium phenylphosphate; disodium, dipotassium, dicesium and dilithium salts of bisphenol A; and sodium, potassium, cesium and lithium salts of phenol.

Examples of the compound using a periodic table Group 2 metal include magnesium hydroxide, calcium hydroxide, strontium hydroxide, barium hydroxide, magnesium hydrogencarbonate, calcium hydrogencarbonate, strontium hydrogencarbonate, barium hydrogencarbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenylphosphate.

Examples of the compound using periodic table Group 4 metal, Group 12 metal and Group 14 metal include a titanium alkoxide such as tetraethyl titanate, tetraisopropyl titanate and tetra-n-butyl titanate; a titanium halide such as titanium tetrachloride; a zinc salt such as zinc acetate, zinc benzoate and zinc 2-ethylhexanoate; a tin compound such as tin(II) chloride, tin(IV) chloride, tin(II) acetate, tin(IV) acetate, dibutyltin dilaurate, dibutyltin oxide and dibutyltin dimethoxide; a zirconium compound such as zirconium acetylacetonate, zirconium oxyacetate and zirconium tetrabutoxide; and a lead compound such as lead(II) acetate, lead(IV) acetate and lead(IV) chloride.

<Ratio of Raw Materials, etc. Used>

In the production of the polycarbonate polyol according to the present invention, the amount of the carbonic acid diester used is not particularly limited, but the lower limit is usually, in terms of the molar ratio per mol of the total of dihydroxy compounds, preferably 0.50, more preferably 0.55, still more preferably 0.60, yet still more preferably 0.65, and the upper limit is usually 1.20, preferably 1.15, more preferably 1.10, still more preferably 1.00, yet still more preferably 0.98. If the amount of the carbonic acid diester used exceeds the upper limit above, the proportion of the obtained polycarbonate polyol in which the terminal group is not a hydroxyl group may be increased, or the molecular weight may not reach the predetermined range, failing in producing the polycarbonate polyol according to the present invention, whereas if the amount used is less than the lower limit above, polymerization may not proceed to the predetermined molecular weight.

In the production of the polycarbonate polyol according to the present invention, the ratio between the amount used of the dihydroxy compound giving the structure (A) and the amount used of the dihydroxy compound giving the structure (B) or structure (C) (hereinafter, sometimes referred as "raw material (A)/raw material (B) ratio" or "raw material (A)/raw material (C) ratio") is usually, in terms of the molar ratio, dihydroxy compound giving the structure (A)/dihydroxy compound giving the structure (B) or structure (C) = 100/0 to 100/99. By introducing the structure (B) into the molecular chain, the regularity of the polycarbonate polyol is disordered, which produces an effect that the melting point and viscosity are reduced and in turn, the handling property is improved. The above-described effects of the present invention, such as rigidity and hydrophilicity, are brought about mainly by the moiety of the structure (C). If the proportion of the structure (B) or (C) in the polycarbonate polyol according to the present invention is too small, the effects above may not be sufficiently obtained. The raw material (A)/raw material (B) ratio or raw material (A)/raw material (C) ratio is preferably from 100/0 to 100/90, more preferably from 100/20 to 100/80, still more preferably from 100/30 to 100/70.

In the case of using a transesterification catalyst when producing the polycarbonate polyol according to the present invention, the amount used thereof is preferably an amount not affecting the performance even if the catalyst remains in the obtained polycarbonate polyol, and the upper limit is, as the weight ratio in terms of metal to the weight of the dihydroxy compound, preferably 500 ppm, more preferably 100 ppm, still more preferably 50 ppm. On the other hand, the lower limit must be an amount large enough to obtain sufficient polymerization activity and is preferably 0.01 ppm, more preferably 0.1 ppm, still more preferably 1 ppm.

Also, in the case where a compound of a periodic table Group 2 metal is used as the catalyst, the amount used thereof is, as the total amount of all metal atoms, preferably 5 μmol or more, more preferably 7 μmol or more, still more preferably 10 μmol or more, and is preferably 500 μmol or less, more preferably 300 μmol or less, still more preferably 100 μmol or less, per mol of all dihydroxy compounds used.

<Reaction Conditions, etc.>

The method for charging the reaction raw materials is not particularly limited, and there may be freely selected a method, for example, a method where all amounts of the dihydroxy compound, the carbonic acid ester and the catalyst are charged simultaneously and subjected to the reaction; in the case of the carbonic acid ester being solid, a method where the carbonic acid ester is first charged, heated and melted and thereafter, the dihydroxy compound and the catalyst are added; a method where conversely, the dihydroxy compound is first charged and melted and the carbonic acid ester and the catalyst are charged thereto; and a method where a part of the dihydroxy compound and carbonic acid esters or chlorocarbonic acid esters are reacted to synthesize a diester carbonate derivative of the dihydroxy compound and thereafter, the derivative is reacted with the remaining dihydroxy compound. In order to obtain the polycarbonate polyol according to the present invention where the proportion in terms of the number of terminal groups when the molecular chain terminal is an alkyloxy group or an aryloxy group is 5% or less, a method of adding a part of the dihydroxy compound at the end of the reaction may be also employed. In this case, the upper limit of the amount of the dihydroxy compound added at the end is usually 20%, preferably 15%, more preferably 10%, based on the amount of the dihydroxy compound that should be charged, and the lower limit is usually 0.1%, preferably 0.5%, more preferably 1.0%.

The reaction temperature at the transesterification reaction may be arbitrarily employed as long as it is a temperature at which a practicable reaction rate can be obtained. The temperature is not particularly limited but is usually 70°C or more, preferably 100°C or more, more preferably 130°C or more. Also, the temperature is usually 250°C or less, preferably 230°C or less, more preferably 200°C or less, still more preferably less than 180°C, yet still more preferably 170°C or less, and most preferably 165°C or less. If the temperature exceeds the upper limit above, the obtained polycarbonate polyol may be colored, an ether structure may be produced, or the proportion (I) of the terminal (A) may become too large, as a result, there may be arise a problem in the quality, for example, the desired physical properties may not be sufficiently developed when producing a polyurethane by using the polycarbonate polyol as a raw material.

The reaction may be performed under atmospheric pressure, but since the transesterification reaction is an equilibrium reaction, the reaction can be biased to the production system by distilling out the produced light boiling component to the outside of the system. Accordingly, a reduced pressure condition is preferably employed in the latter half of reaction so as to perform the reaction while distilling out a light boiling component. It is also possible to gradually reduce the pressure in the middle of reaction and perform the reaction while distilling out the produced light boiling component.

In particular, the reaction is preferably performed by raising the decompression degree at the end of reaction, because byproduct monoalcohol and phenols as well as cyclic carbonate and the like can be removed by distillation.

In this case, the reaction pressure at the end of reaction is not particularly limited, but the upper limit is usually 10 kPa, preferably 5 kPa, more preferably 1 kPa. In order to effectively distill out such a light boiling component, the reaction may be also performed while flowing a small amount of an inert gas such as nitrogen, argon and helium to the reaction system.

In the case of using a low-boiling carbonic acid ester or dihydroxy compound in the transesterification reaction, a method of performing the reaction at near the boiling point of the carbonic acid ester or dihydroxy compound in the initial stage of reaction, gradually raising the temperature as the reaction proceeds, and further allowing the reaction to proceed may be also employed. This method is preferred because an unreacted carbonic acid ester can be prevented from distilling out in the initial stage of reaction. Furthermore, in order to prevent the raw material from distilling out in the initial stage of reaction, it is also possible to attach a reflux tube to the reactor and perform the reaction while refluxing the carbonic acid ester and the dihydroxy compound. This is preferred because the raw material charged is not lost and the quantitative ratio of reagents can be accurately adjusted.

The polymerization reaction is performed while measuring the molecular weight of the produced polycarbonate polyol and terminated upon reaching the target molecular weight. The reaction time necessary for the polymerization greatly varies depending on the dihydroxy compound and carbonic acid ester used, whether the catalyst is used or not used, and the kind of the catalyst and therefore cannot be specified indiscriminately, but the reaction time necessary for reaching the predetermined molecular weight is usually 50 hours or less, preferably 20 hours or less, more preferably 10 hours or less.

As described above, when a catalyst is used for the polymerization reaction, the catalyst usually remains in the obtained polycarbonate polyol, and remaining of a metal catalyst may make it impossible to control the reaction when performing the polyurethanation reaction. In order to suppress the effect of this residual catalyst, for example, a phosphorus-based compound in an amount substantially equimolar to the transesterification catalyst used may be added. Furthermore, when a heat treatment is applied after the addition as described later, the transesterification catalyst can be efficiently inactivated.

The phosphorus-based compound used for inactivation of the transesterification catalyst includes, for example, an inorganic phosphoric acid such as phosphoric acid and phosphorous acid, and an organic phosphoric acid ester such

as dibutyl phosphate, tributyl phosphate, trioctyl phosphate, triphenyl phosphate and triphenyl phosphite.

One of these may be used alone, or two or more thereof may be used in combination.

The amount of the phosphorus-based compound used is not particularly limited and, as described above, may be substantially equimolar to the transesterification catalyst used. Specifically, per mol of the transesterification catalyst used, the upper limit is preferably 5 mol, more preferably 2 mol, and the lower limit is preferably 0.8 mol, more preferably 1.0 mol. If a phosphorus-based compound in an amount smaller than the above is used, inactivation of the transesterification catalyst in the reaction product may be insufficient and in the case of using the obtained polycarbonate polyol, for example, as a raw material in the production of a polyurethane, the reactivity of the polycarbonate polyol with an isocyanate group may not be sufficiently reduced. Also, if a phosphorus-based compound in an amount exceeding this range is used, the obtained polycarbonate polyol may be colored.

Inactivation of the transesterification catalyst by the addition of a phosphorus-based compound may be performed at room temperature, but when a heating treatment is applied, the inactivation is achieved more efficiently. Although the temperature of the heating treatment is not particularly limited, the upper limit is preferably 150°C, more preferably 120°C, still more preferably 100°C, and the lower limit is preferably 50°C, more preferably 60°C, still more preferably 70°C. If the temperature is less than this range, inactivation of the transesterification catalyst may take a long time or the degree of inactivation may be insufficient. On the other hand, if the temperature exceeds 150°C, the obtained polycarbonate polyol may be colored.

The time spent for the reaction with the phosphorus-based compound is not particularly limited but is usually from 1 to 5 hours.

The polycarbonate polyol after the polymerization reaction may be filtered, and the filtration may be performed by a normal filtration method. At this time, a filter capable of withstanding the polymerization reaction temperature and having chemical resistance against raw materials used, such as dihydroxy compound and carbonic acid diester, byproducts such as monohydroxy compound and cyclic carbonate, and substances such as target product polycarbonate polyol is preferred, and a stainless steel-made filter is preferably used. For example, there is a method of performing filtration by using Stainless Housing: 1TS Type manufactured by ADVANTEC and a stainless mesh cartridge filter (for example, TMC-2-STCH or TMP-2-STCH).

<Purification>

After the reaction, purification may be performed for the purpose of removing, from the polycarbonate polyol product, an impurity with the terminal structure being an alkyloxy group, an impurity with the terminal structure being an aryloxy group, phenols, the dihydroxy compound or carbonic acid ester, a light-boiling byproduct cyclic carbonate, the catalyst added, and the like. In this purification, a method of removing the compound by distillation may be employed for the light-boiling component. Specific distillation methods include, for example, reduced-pressure distillation, steam distillation and thin-film distillation. The form thereof is not particularly limited, and an arbitrary method can be employed. Also, for removing a water-soluble impurity, the product may be washed with water, alkaline water, acidic water, a solution having dissolved therein a chelating agent, or the like. In this case, the compound that is dissolved in water may be arbitrarily selected.

[Polyurethane]

The polyurethane according to the present invention is obtained using the above-described polycarbonate polyol according to the present invention.

The method for producing the polyurethane according to the present invention by using the polycarbonate polyol according to the present invention employs known polyurethanation reaction conditions in producing a normal polyurethane.

For example, the polycarbonate polyol according to the present invention is reacted with a polyisocyanate and a chain extender at a temperature ranging from room temperature to 200°C, whereby the polyurethane according to the present invention can be produced.

Also, the polyurethane can be produced by first reacting the polycarbonate polyol according to the present invention with an excess of polyisocyanate to produce a prepolymer with terminal isocyanate and furthermore, raising the polymerization degree with use of a chain extender.

{Reaction Reagent, etc.}

<Polyisocyanate>

The polyisocyanate used for producing the polyurethane by using the polycarbonate polyol according to the

present invention includes various known aliphatic, alicyclic or aromatic polyisocyanate compounds.

Representative examples thereof include an aliphatic diisocyanate such as tetramethylene diisocyanate, hexamethylene diisocyanate, 2,2,4-trimethylhexamethylene diisocyanate, 2,4,4-trimethylhexamethylene diisocyanate, lysine diisocyanate and dimer diisocyanate obtained by converting a carboxyl group of a dimer acid into an isocyanate group; an alicyclic diisocyanate such as 1,4-cyclohexane diisocyanate, isophorone diisocyanate, 1-methyl-2,4-cyclohexane diisocyanate, 1-methyl-2,6-cyclohexane diisocyanate, 4,4'-dicyclohexylmethane diisocyanate and 1,3-bis(isocyanatomethyl)cyclohexane; and an aromatic diisocyanate such as a xylylene diisocyanate, 4,4'-diphenyl diisocyanate, 2,4-tolylene diisocyanate, 2,6-tolylene diisocyanate, m-phenylene diisocyanate, p-phenylene diisocyanate, 4,4'-diphenylmethane diisocyanate, 4,4'-diphenyldimethylmethane diisocyanate, 4,4'-dibenzyl diisocyanate, dialkyldiphenylmethane diisocyanate, tetraalkyldiphenylmethane diisocyanate, 1,5-naphthylene diisocyanate, 3,3'-dimethyl-4,4'-biphenylene diisocyanate, polymethylene polyphenylisocyanate, phenylene diisocyanate and m-tetramethylxylylene diisocyanate. One of these may be used alone, or two or more thereof may be used in combination.

Among these, in view of good balance of physical properties of the polyurethane obtained and industrial availability in a large amount at low cost, most preferred organic diisocyanates are 4,4'-diphenylmethane diisocyanate, hexamethylene diisocyanate and isophorone diisocyanate.

<Chain Extender>

The chain extender used when producing the polyurethane according to the present invention is a low-molecular-weight compound having at least two active hydrogens capable of reacting with an isocyanate group and usually includes a polyol and a polyamine.

Specific examples thereof include a linear dihydroxy compound such as ethylene glycol, diethylene glycol, 1,3-propylene glycol, 1,4-butanediol, 1,5-pentanediol, 1,6-hexanediol, 2,4-heptanediol, 1,8-octanediol, 1,4-dimethylolhexane, 1,9-nonanediol, 1,12-dodecanediol and dimer diol; a dihydroxy compound having a branched chain, such as 2-methyl-1,3-propanediol, 2,2-dimethyl-1,3-propanediol, 2,2-diethyl-1,3-propanediol, 2-methyl-2-propyl-1,3-propanediol, 2-ethyl-1,3-hexanediol, 2,2,4-trimethyl-1,3-pentanediol, 2-methyl-1,8-octanediol and 2-butyl-2-ethyl-1,3-propanediol; a dihydroxy compound having a cyclic group, such as 1,4-cyclohexanediol, 1,4-cyclohexanedimethanol and 1,4-dihydroxyethylcyclohexane; a dihydroxy compound having an aromatic group, such as xylylene glycol, 1,4-dihydroxyethylbenzene and 4,4'-methylenebis(hydroxyethylbenzene); polyols such as glycerin, trimethylolpropane and pentaerythritol; hydroxyamines such as N-methylethanolamine and N-ethylethanolamine; polyamines such as ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine and N,N'-diaminopiperazine; and water.

One of these chain extenders may be used alone, or two or more thereof may be used in combination.

Among these, in view of good balance of physical properties of the obtained polyurethane and industrial availability in a large amount at low cost, most preferred chain extenders are 1,4-butanediol, 1,5-pentanediol, 1,6-hexanediol, 1,8-octanediol, 1,9-nonanediol, 1,4-cyclohexanedimethanol, 1,4-dihydroxyethylcyclohexane, ethylenediamine and 1,3 -aminopropane.

<Chain Terminator>

In producing the polyurethane according to the present invention, a chain terminator having one active hydrogen group may be used, if desired, for the purpose of controlling the molecular weight of the obtained polyurethane.

Examples of the chain terminator include an aliphatic monool having a hydroxyl group, such as ethanol, propanol, butanol and hexanol, and an aliphatic monoamine having an amino group, such as diethylamine, dibutylamine, n-butylamine, monoethanolamine and diethanolamine.

One of these may be used alone, or two or more thereof may be used in combination.

<Catalyst>

In the polyurethane forming reaction when producing the polyurethane according to the present invention, an amine-based catalyst such as triethylamine, N-ethylmorpholine and triethylenediamine, a tin-based compound, for example, a tin-based catalyst such as trimethyltin laurate and dibutyltin dilaurate, and a known urethane polymerization catalyst typified by an organic metal salt such as titanium-based compound, may be also used. One of urethane polymerization catalysts may be used alone, or two or more thereof may be used in combination.

<Other Polyols>

In producing the polyurethane according to the present invention, other known polyols may be used in combination, if desired, in addition to the polycarbonate polyol according to the present invention. Examples of usable known polyols here include polyoxyalkylene glycols such as polyethylene glycol, polypropylene glycol and polyoxytetramethylene glycol (PTMG); alkylene oxide adducts of a polyalchol, such as ethylene oxide adduct and propylene oxide adduct of bisphenol A or glycerin; polyester polyol, polycaprolactone polyol, and polycarbonate polyol.

Examples of the polyester polyol include those obtained from a dibasic acid such as adipic acid, phthalic acid, isophthalic acid, maleic acid, succinic acid and fumaric acid, and glycols such as ethylene glycol, diethylene glycol, 1,3-propylene glycol, 1,4-butanediol, 1,5-pentanediol, 1,6-hexanediol and trimethylolpropane.

Examples of the usable polycarbonate polyol include a homopolycarbonate polyol and a copolymerized polycarbonate polyol, which are produced from 1,4-butanediol, 1,5-pentanediol, 1,6-hexanediol, cyclohexanedimethanol, and 2-methylpropanediol.

In the case of using these other polyols, for fully obtaining the effects by the use of the polycarbonate polyol according to the present invention, although its ratio in all polyols is not particularly limited, the polycarbonate polyol according to the present invention is preferably used to account for usually 30 wt% or more, particularly 50 wt% or more.

<Solvent>

The polyurethane forming reaction in producing the polyurethane according to the present invention may be performed using a solvent.

Preferred examples of the solvent include an amide-based solvent such as dimethylformamide, diethylformamide, dimethylacetamide and N-methylpyrrolidone; a sulfoxide-based solvent such as dimethylsulfoxide; an ether-based solvent such as tetrahydrofuran and dioxane; a ketone-based solvent such as methyl isobutyl ketone, methyl ethyl ketone and cyclohexanone; an ester-based solvent such as methyl acetate, ethyl acetate and butyl acetate; and an aromatic hydrocarbon-based solvent such as toluene and xylene. One of these solvents may be used alone, or two or more thereof may be used as a mixed solvent.

Among these, preferred organic solvents are methyl ethyl ketone, ethyl acetate, toluene, dimethylformamide, dimethylacetamide, N-methylpyrrolidone, and dimethyl sulfoxide.

Also, a polyurethane resin in the form of an aqueous dispersion may be produced from a polyurethane resin composition having blended therein the polycarbonate polyol according to the present invention, a polydiisocyanate, and the above-described chain extender.

{Production Method}

As the method for producing the polyurethane according to the present invention by using the above-described reaction reagents, all production methods that are employed in general experimentally or industrially can be used.

Examples thereof include a method of batchwise mixing and reacting a polyol containing the polycarbonate polyol according to the present invention, a polyisocyanate and a chain extender (hereinafter, referred to as "one-step method"), and a method of first reacting a polyol containing the polycarbonate polyol according to the present invention with a polyisocyanate to prepare a prepolymer with both terminals being an isocyanate group, and then reacting the prepolymer with a chain extender (hereinafter, referred to as "two-step method").

The two-step method involves a step of previously reacting a polyol containing the polycarbonate polyol according to the present invention with one equivalent or more of an organic polyisocyanate to prepare an intermediate having isocyanate at both terminals, which is a portion corresponding to a soft segment of a polyurethane. When a prepolymer is once prepared in this way and then reacted with a chain extender, the molecular weight of the soft segment moiety may be easily adjusted, which is useful when phase separation of a soft segment from a hard segment must be unfailingly performed.

<One-Step Method>

The one-step method is also called a one-shot method and is a method of performing the reaction by batchwise charging a polyol containing the polycarbonate polyol according to the present invention, a polyisocyanate, and a chain extender.

The amount of the polyisocyanate used in the one-step method is not particularly limited, but assuming that the total of the number of hydroxyl groups of the polyol containing the polycarbonate polyol according to the present invention and the number of hydroxyl groups and amino groups of the chain extender is 1 equivalent, the lower limit is usually 0.7 equivalents, preferably 0.8 equivalents, more preferably 0.9 equivalents, still more preferably 0.95 equivalents,

and the upper limit is usually 3.0 equivalents, preferably 2.0 equivalents, more preferably 1.5 equivalents, still more preferably 1.1 equivalents.

If the amount of the polyisocyanate used is too large, an unreacted isocyanate group tends to cause a side reaction, failing in obtaining desired physical properties, whereas if the amount used is too small, the molecular weight of the polyurethane may not be sufficiently increased and developing the desired performance tends to result in failure.

Also, the amount of the chain extender used is not particularly limited, but assuming that the number obtained by subtracting the number of isocyanate groups of the polyisocyanate from the number of hydroxyl groups of the polyol containing the polycarbonate polyol according to the present invention is 1 equivalent, the lower limit is usually 0.7 equivalents, preferably 0.8 equivalents, more preferably 0.9 equivalents, still more preferably 0.95 equivalents, and the upper limit is 3.0 equivalents, preferably 2.0 equivalents, more preferably 1.5 equivalents, still more preferably 1.1 equivalents. If the amount of the chain extender used is too large, the obtained polyurethane tends to be least soluble in a solvent, making the processing difficult, whereas if the amount used is too small, the obtained polyurethane may become too soft and may fail in exhibiting sufficient strength or hardness or having an elastic recovery performance or an elastic retention capacity or may be deteriorated in the high-temperature characteristics.

<Two-Step Method>

The two-step method is also called a prepolymer method and is a method for producing a polyurethane by previously reacting a polyisocyanate and a polyol containing the polycarbonate polyol according to the present invention at an equivalent ratio of polyisocyanate/polyol in reaction of 1.0 to 10.00 to produce a prepolymer with a terminal isocyanate group and then adding thereto a chain extender having an active hydrogen such as polyhydric alcohol and amine compound.

The two-step method can be performed with or without the co-presence of a solvent.

The production of a polyurethane by the two-step method can be performed by any one method of the following (1) to (3):

(1) a polyisocyanate and a polyol containing a polycarbonate polyol are first directly reacted without using a solvent to synthesize a prepolymer, and the prepolymer is used as it is for the subsequent chain extension reaction;
(2) a prepolymer is synthesized by the method of (1), then dissolved in a solvent and used for the subsequent chain extension reaction; and
(3) a polyisocyanate and a polyol containing a polycarbonate polyol are reacted by using a solvent from the beginning, and then a chain extension reaction is performed in the solvent.

In the case of the method (1), it is important to obtain the polyurethane in the form of existing together with a solvent by employing a method of, for example, dissolving a chain extender in a solvent or simultaneously introducing the prepolymer and a chain extender into a solvent, so as to execute the action of a chain extender.

The amount of the polyisocyanate used in the two-step method is not particularly limited, but assuming that the number of hydroxyl groups of the polyol containing the polycarbonate polyol is 1 equivalent, the lower limit of the amount used is, in terms of the number of isocyanate groups, usually 1.0, preferably 1.05, and the upper limit is usually 10.0, preferably 5.0, more preferably 3.0.

If the amount of the isocyanate used is too large, an excessive isocyanate group tends to cause a side reaction and disadvantageously affect the physical properties of the polyurethane, whereas if the amount used is too small, the molecular weight of the obtained polyurethane may not be sufficiently increased and a problem is likely to occur in the strength or thermal stability.

The amount of the chain extender used is not particularly limited, but relative to the equivalent of the isocyanate group contained in the prepolymer, the lower limit is usually 0.1, preferably 0.5, more preferably 0.8, and the upper limit is usually 5.0, preferably 3.0, more preferably 2.0.

At the time of performing the chain extension reaction, a monofunctional organic amine or alcohol may be caused to present together for the purpose of adjusting the molecular weight.

In the chain extension reaction, respective components are reacted at 0 to 250°C, but this temperature varies depending on the amount of the solvent, the reactivity of the raw material used, the reaction equipment or the like and is not particularly limited. If the temperature is too low, the reaction may too slowly proceed or the productivity may be reduced due to low solubility of the raw material or the polymerization product, whereas if the temperature is too high, there may be occur a side reaction or decomposition of the obtained polyurethane. The chain extension reaction may be performed with degassing under reduced pressure.

In the chain extension reaction, a catalyst, a stabilizer or the like may be added, if desired.

The catalyst includes, for example, one member or two or more members out of triethylamine, tributylamine, dibutyltin dilaurate, stannous octylate, acetic acid, phosphoric acid, sulfuric acid, hydrochloric acid, and sulfonic acid;

and the stabilizer includes, for example, one member or two or more members out of 2,6-dibutyl-4-methylphenol, distearyl thiodipropionate, di-beta-naphthyl-phenylenediamine, and tri(dinonylphenyl)phosphite. However, in the case of a chain extender having high reactivity, such as short-chain aliphatic amine, the reaction is preferably performed without adding a catalyst.

<Aqueous Polyurethane Emulsion>

An aqueous polyurethane emulsion may be also produced by using the polycarbonate polyol according to the present invention.

In this case, at the time of producing a prepolymer by reacting a polyol containing a polycarbonate polyol with a polyisocyanate, the prepolymer is formed by mixing a compound having at least one hydrophilic functional group and at least two isocyanate reactive groups and then reacted with a chain extender to obtain a polyurethane emulsion.

The hydrophilic functional group of the compound used here having at least one hydrophilic functional group and at least two isocyanate reactive groups is, for example, a carboxylic acid group or a sulfonic acid group and is a group capable of being neutralized with an alkaline group. Also, the isocyanate reactive group is a group capable of generally reacting with an isocyanate to form a urethane bond or a urea bond, such as hydroxyl group, primary amino group and secondary amino group, and these groups may be mixed in the same molecule.

The compound having at least one hydrophilic functional group and at least two isocyanate reactive groups specifically includes, for example, 2,2'-dimethylolpropionic acid, 2,2-methylolbutyric acid, and 2,2'-dimethylolvaleric acid and also includes diaminocarboxylic acids such as lysine, cystine and 3,5-diaminocarboxylic acid. One of these may be used alone, or two or more thereof may be used in combination. In the case of using such a compound in practice, the compound may be used by neutralizing it with an amine such as trimethylamine, triethylamine, tri-n-propylamine, tributylamine and triethanolamine, or an alkaline compound such as sodium hydroxide, potassium hydroxide and ammonia.

In producing an aqueous polyurethane emulsion, as for the amount of the compound having at least one hydrophilic functional group and at least two isocyanate reactive groups, in order to raise the dispersion performance in water, the lower limit is usually 1 wt%, preferably 5 wt%, more preferably 10 wt%, based on the weight of a polyol containing the polycarbonate polyol according to the present invention. On the other hand, if the compound is added in an excess amount, the characteristics of the polycarbonate polyol according to the present invention may not be maintained. For this reason, the upper limit is usually 50 wt%, preferably 40 wt%, more preferably 30 wt%.

In synthesizing or storing the aqueous polyurethane emulsion, the emulsion stability may be maintained by using together, for example, an anionic surfactant typified by a higher fatty acid, a resin acid, an acidic fatty alcohol, a sulfuric acid ester, a higher alkyl sulfonate, an alkylaryl sulfonate, a sulfonated castor oil, sulfosuccinic acid ester and the like, a cationic surfactant such as primary amine salt, secondary amine salt, tertiary amine salt, quaternary amine salt and pyridinium salt, or a nonionic surfactant typified by a known reaction product of an ethylene oxide with a long-chain fatty alcohol or phenols.

Also, at the time of reacting the prepolymer with a chain extender to make a polyurethane emulsion, the prepolymer may be neutralized, if desired, and then dispersed in water.

The thus-produced aqueous polyurethane emulsion can be used for various applications. Above all, a chemical raw material small in the environmental load is recently demanded and with an aim to use no organic solvent, the aqueous polyurethane emulsion can substitute for the conventional product.

Specific suitable applications of the aqueous polyurethane emulsion include a coating agent, an aqueous paint, an adhesive, a synthetic leather, and an artificial leather. In particular, an aqueous polyurethane emulsion produced using the polycarbonate polyol according to the present invention has the structure (A) in the polycarbonate polyol and therefore, exhibits high hardness, excellent abrasion resistance and long-term maintainability of surface properties, and in turn, its utilization as a coating agent or the like can have an advantage in comparison with an aqueous polyurethane emulsion using the conventional polycarbonate polyol.

Also, the polycarbonate polyol according to the present invention after the reaction with a poiyisocyanate may be reacted with a hydroxy group-containing acrylic acid ester or methacrylic acid ester to derive a urethane acrylate, a urethane methacrylate or the like. These urethane acrylate and urethane methacrylate are widely used as a coating agent, and the polycarbonate polyol according to the present invention can be used as a raw material for those applications without any particular limitation. Furthermore, the polycarbonate polyol can be also utilized by changing the polymerizable functional group from a (meth)acrylate to a glycidyl group, an allyl group, a propargyl group, or the like.

{Additives}

In the polyurethane according to the present invention produced using the polycarbonate polyol according to the present invention, various additives such as thermal stabilizer, light stabilizer, coloring agent, bulking agent, stabilizer, ultraviolet absorber, antioxidant, anti-adhesive agent, flame retardant, age resistor and inorganic filler can be added and

mixed, as long as the characteristics of the polyurethane according to the present invention are not damaged.

The compound usable as the thermal stabilizer includes, for example, a phosphorus compound such as aliphatic, aromatic or alkyl group-substituted aromatic ester of phosphoric acid or phosphorous acid, hypophosphorous acid derivative, phenylphosphonic acid, phenylphosphinic acid, diphenylphosphonic acid, polyphosphonate, dialkyl pentaerythritol diphosphite and dialkyl bisphenol-A diphosphite; a phenol-based derivative, particularly a hindered phenol compound; a sulfur-containing compound such as thioether-based, dithioic acid salt-based, mercaptobenzimidazole-based, thiocarbanilide-based, thiodipropionic acid ester-based compounds; and a tin-based compound such as tin maleate and dibutyltin monoxide.

Specific examples of the hindered phenol compound include Irganox 245 (trade name, produced by BASF Japan), Irganox 1010 (trade name, produced by BASF Japan), and Irganox 1520 (trade name, produced by BASF Japan).

Specific examples of the phosphorus compound include PEP-4C, PEP-8, PEP-36, PEP-24G, HP-10 (all are trade names, produced by ADEKA Corporation), and Irgafos 168 (trade name: produced by BASF Japan).

Specific examples of the sulfur-containing compound include a thioether compound such as dilauryl thiopropionate (DLTP) and distearyl thiopropionate (DSTP).

Examples of the light stabilizer include a benzotriazole-based compound and a benzophenone-based compound, and specifically, "TINUVIN 622LD", "TINUVIN 765" (both produced by BASF Japan), "SANOL LS-2626", "SANOL LS-765" (both produced by Sankyo), and like can be used.

Examples of the ultraviolet absorber include "TINUVIN 328" and "TINUVIN 234" (both produced by BASF Japan).

Examples of the coloring agent include a dye such as direct dye, acid dye, basic dye and metal complex salt dye; an inorganic pigment such as carbon black, titanium oxide, zinc oxide, iron oxide and mica; and an organic pigment such as coupling azo-based, condensed azo-based, anthraquinone-based, thioindigo-based, dioxazone-based and phthalocyanine-based pigments.

Examples of the inorganic filler include glass short fiber, carbon fiber, alumina, talc, graphite, melamine, and white clay.

Examples of the flame retardant include an organic compound containing phosphorus and halogen, an organic compound containing bromine or chlorine, and an additive and reactive flame retardant such as ammonium polyphosphate, aluminum hydroxide and antimony oxide.

One of these additives may be used alone, or two or more thereof be used in an arbitrary combination at an arbitrary ratio.

As for the amount added of such an additive relative to the polyurethane, the lower limit is preferably 0.01 wt%, more preferably 0.05 wt%, still more preferably 0.1 wt%, and the upper limit is preferably 10 wt%, more preferably 5 wt%, still more preferably 1 wt%. If the amount added of the additive is too small, the effect by its addition cannot be sufficiently obtained, whereas if the amount added is too large, the additive may precipitate in the polyurethane to cause turbidity.

{Polyurethane Film•Polyurethane Sheet}

In the case of producing a film by using the polyurethane according to the present invention, the lower limit of the film thickness is usually 10 μm, preferably 20 μm, more preferably 30 μm, and the upper limit is usually 1,000 μm, preferably 500 μm, more preferably 100 μm. If the thickness of the film is too large, sufficient moisture permeability may not be obtained, whereas if the thickness is too small, a pinhole is likely to be produced or the film tends to undergo blocking and become difficult to handle.

The polyurethane film according to the present invention can be preferably used for a medical material such as medical self-adhesive film, a sanitary material, a packing material, a decorative film, and other moisture permeable materials. Also, the polyurethane film according to the present invention may be deposited on a support such as cloth and nonwoven fabric. In this case, the thickness of the polyurethane film itself may be smaller than 10 μm.

Furthermore, a polyurethane sheet may be produced using the polyurethane according to the present invention. In that case, the upper limit of the sheet thickness is not particularly limited, and the lower limit is usually 0.5 mm, preferably 1 mm, more preferably 3 mm.

{Physical Properties}

<Molecular Weight>

The molecular weight of the polyurethane according to the present invention is appropriately adjusted according to its usage and is not particularly limited but is preferably, as the number average molecular weight (Mn) in terms of polystyrene measured by the GPC, from 50,000 to 500,000, more preferably from 100,000 to 300,000. If the molecular weight is less than the lower limit above, sufficient strength or hardness may not be obtained, whereas if the molecular

weight exceeds the upper limit above, the handling property such as processability tends to be deteriorated.

<Tensile Elongation at Break>

As for the tensile elongation at break of the polyurethane according to the present invention, which is determined by measuring a strip sample having a width of 10 mm, a length of 100 mm and a thickness of approximately from 50 to 100 μm under the conditions of a chuck-to-chuck distance of 50 mm, a tensile speed of 500 mm/min, a temperature of 23°C and a relative humidity of 55%, the lower limit is usually 50%, preferably 100%, more preferably 150%, and the upper limit that is usually 400%, preferably 350%, more preferably 300%. If the tensile elongation at break is less than the lower limit above, the handling property such as processability tends to be deteriorated, whereas if it exceeds the upper limit above, sufficient strength or hardness may not be obtained.

<100% Modulus>

As for the 100% modulus of the polyurethane according to the present invention, which is determined by measuring a sample strip having a width of 10 mm, a length of 100 mm and a thickness of approximately from 50 to 100 μm under the conditions of a chuck-to-chuck distance of 50 mm, a tensile speed of 500 mm/min, a temperature of 23°C and a relative humidity of 55%, the lower limit is usually 10 MPa or more, preferably 15 MPa or more, more preferably 20 MPa or more, and the upper limit is usually 200 MPa or less, preferably 150 MPa or less, more preferably 100 MPa or less. If the 100% modulus is less than the lower limit above, the strength or hardness may lack, and if it exceeds the upper limit above, the handling property such as processability tends to be deteriorated.

<Creep Property>

As for the creep property $(((L-50)/50)\times100(\%))$ of the polyurethane according to the present invention, which is determined by forming a polyurethane film having a thickness of 100 μm, cutting the film into a 10 mm-wide strip, marking a reference line with a width of 50 mm, placing the obtained sample in a constant-temperature constant-humidity state at a temperature of 23°C and a relative humidity of 55% RH, applying a load of 1 MPa in the length direction, removing the load after the elapse of 16 hours, and measuring the length (L mm) between reference lines, the lower limit is not particularly limited and is preferably smaller but is usually 5%, preferably 2%, more preferably 1%, and the upper limit is usually 20%, preferably 10%. If the creep property is less than the lower limit above, the viscosity of the polyurethane may be high to increase the load during processing, whereas if it exceeds the upper limit above, the strength or hardness may lack.

<Hardness>

The polyurethane according to the present invention is characterized in that high hardness is obtained due to having a high-rigidity structure (A). Specifically, for example, when a film sample having a thickness of approximately from 50 to 100 μm is fixed on a tester (Type II, Gakushin Type) and the weight reduction ratio obtained by performing a friction test for 500 reciprocations under a load of 4.9 N in accordance with JIS L0849 (2004) is expressed by $(\{(\text{weight of sample before test} - \text{weight of sample after test})/(\text{weight of sample before test})\}\times100)$, the upper limit of the weight reduction ratio is usually 2%, preferably 1.5%, more preferably 1.0%. On the other hand, the lower limit of the weight reduction ratio is usually 0.1%, preferably 0.05%, more preferably 0.01%.

In addition, when the hardness is denoted by, as an indicator, a pencil hardness measured in accordance with JIS K-5600-5-4 (1999), this film sample has a hardness of usually 6B or more, preferably 4B or more, more preferably 3B or more.

{Usage}

The polyurethane according to the present invention can exhibit various characteristics and can be widely used for a foam, an elastomer, a paint, a fiber, an adhesive, a floor material, a sealant, a medical material, an artificial leather, a coating agent, an aqueous polyurethane paint, and the like.

Among others, when the high-rigidity polyurethane according to the present invention is used for applications such as artificial leather, synthetic leather, aqueous polyurethane, adhesive, medical material, floor material and coating agent, thanks to its excellent friction resistance and blocking resistance, there can be provided good surface characteristics such that a flaw by scratching or the like is less likely to occur and deterioration due to friction is reduced.

The polyurethane according to the present invention can be used for a cast polyurethane elastomer. Specific examples of the usage include rolls such as mill roll, papermaking roll, office equipment and pretension roll, a solid tire

or caster of a forklift, a vehicle new-tram, a cart, a truck and the like, and an industrial product such as conveyor belt idler, guide roll, pulley, steel tube lining, rubber screen for ore, gears, connection ring, liner, pump impeller, cyclone cone and cyclone liner. Furthermore, the cast polyurethane elastomer can be also used for a belt of OA device, a paper feed roll, a cleaning blade of copying machine, a snowplow, a toothed belt, a surf roller, and the like.

The polyurethane according to the present invention is also applied to usage of a thermoplastic elastomer. For example, in the food and medical fields, the thermoplastic elastomer can be used for tubes and hoses in a pneumatic instrument, a coating apparatus, an analytical instrument, a physicochemical instrument, a metering pump, a water treatment apparatus, an industrial robot and the like, and for a spiral tube and a fire hose. Also, the thermoplastic elastomer can be used as a belt such as round belt, V-belt and flat belt, in various driving mechanisms, spinning machines, packaging machines, printing machines and the like. In addition, the thermoplastic elastomer can be used, for example, for a heel top or sole of shoes; a machine part such as coupling, packing, ball joint, bushing, gear and roll; a sports article; a leisure article; and a belt of watches. Furthermore, examples of the automobile part include an oil stopper, a gearbox, a spacer, a chassis part, an interior trim, and a substitute for tire chain. The thermoplastic elastomer can be also used for a film such as keyboard film and automotive film, a curled cord, a cable sheath, a bellows, a conveyance belt, a flexible container, a binder, a synthetic leather, a dipped article, an adhesive, and the like.

The polyurethane according to the present invention can be also applied to usage as a solvent-type two-pack paint and can be applied to a wooden product such as musical instrument, household Buddhist altar, furniture, decorating plywood and sports article. In addition, the polyurethane can be used as a tar epoxy urethane for repairing automobiles.

The polyurethane according to the present invention can be used as a component for a moisture curable one-pack paint, a blocked isocyanate-based solvent paint, an alkyd resin paint, a urethane-modified synthetic resin paint, an ultraviolet curable paint, an aqueous urethane paint and the like, and can be applied to, for example, a paint for plastic bumper, a strippable paint, a coating agent for magnetic tape, an overprint varnish for floor tile, floor material, paper and wood grain printing film, a varnish for wood, a coil coating for high processing, a protective coating for optical fiber, a solder resist, a top coat for metal printing, a base coat for deposition, and a white coating for cans used for food.

The polyurethane according to the present invention can be also applied, as an adhesive, to food package, shoe, footwear, a binder for magnetic tapes, decorative paper, wood, a structural member, and the like and furthermore, can be used as a component for low temperature adhesive and hot melt.

The form in using the polyurethane according to the present invention as an adhesive is not particularly limited, and the polyurethane can be used as a solvent-type adhesive by dissolving the obtained polyurethane in a solvent or used as a hot-melt adhesive without using a solvent.

In the case of using a solvent, the solvent that can be used is not particularly limited as long as it matches the characteristics of the obtained urethane, and both an aqueous solvent and an organic solvent can be used. In particular, in order to reduce the environmental load, demands for an aqueous adhesive obtained by dissolving or dispersing an aqueous polyurethane emulsion in an aqueous solvent are recently increasing, and the polyurethane according to the present invention can be suitably used also for this purpose. Furthermore, in an adhesive produced using the polyurethane according to the present invention, additives and auxiliary agents used in a normal adhesive can be mixed without limitation, if desired. Examples of the additive include a pigment, an anti-blocking agent, a dispersion stabilizer, a viscosity regulator, a leveling agent, an anti-gelling agent, a light stabilizer, an antioxidant, an ultraviolet absorber, a heat resistance improver, an inorganic or organic filler, a plasticizer, a lubricant, an antistatic agent, a reinforcing material, and a catalyst. As the blending method therefor, a known method such as stirring and dispersion can be employed.

The thus-obtained adhesive can provide efficient adhesion of a metal material such as iron, copper, aluminum, ferrite and plated steel sheet, a resin material such as acrylic resin, polyester resin, ABS resin, polyamide resin, polycarbonate resin and vinyl chloride resin, and an inorganic material such as glass and ceramic.

The polyurethane according to the present invention can be used, as a binder, for a magnetic recording medium, an ink, a casting, a fired brick, a graft material, a microcapsule, a granular fertilizer, a granular agrichemical, a polymer cement mortar, a resin mortar, a rubber chip binder, a recycled foam, a glass fiber sizing, and the like.

The polyurethane according to the present invention can be used, as a component of a fiber-processing agent, for a shrink-proofing treatment, a crease-proofing treatment, a water-repelling treatment and the like.

In the case of using the polyurethane according to the present invention as an elastic fiber, the method for fiberization thereof can be performed without any particular limitation as long as it is a method capable of spinning the fiber. For example, a melt spinning method of once pelletizing the polyurethane, melting the pellet, and spinning a fiber directly through a spinneret can be employed. In the case of obtaining an elastic fiber by melt spinning from the polyurethane according to the present invention, the spinning temperature is preferably 250°C or less, more preferably from 200 to 235°C.

The polyurethane elastic fiber according to the present invention may be used directly as a bare yarn or may be coated with another fiber and used as a coated yarn. Another fiber includes a conventionally known fiber such as polyamide fiber, wool, cotton and polyester fiber, and among these, a polyester fiber is preferably used in the present invention. In addition, the polyurethane elastic fiber according to the present invention may contain a disperse dye of

dyeing type.

The polyurethane according to the present invention can be used, as a sealant•caulking, for a concreted wall, an induction joint, a gap around sash frame, a wall-type PC joint, an ALC joint, a boards joint, a composite glass sealant, a heat insulating sash sealant, an automobile sealant, and the like.

The polyurethane according to the present invention is usable as a medical material and can be used as a blood compatible material for a tube, a catheter, an artificial heart, an artificial blood vessel, an artificial valve and the like, or as a disposable material for a catheter, a tube, a bag, surgical gloves, an artificial kidney potting material and the like.

The polyurethane according to the present invention can be used, after modifying the terminal, as a raw material for an UV curable paint, an electron beam curable paint, a photosensitive resin composition for flexographic printing plate, a photocurable coating material composition for optical fiber, and the like.

Examples

The present invention is described in greater detail below by referring to Examples and Comparative Examples, but the present invention is not limited to these Examples as long as the gist thereof is observed.

The evaluation methods for values of respective physical properties are as follows.

[Evaluation Method: Polycarbonate Polyol]

<Amount of Monomer Distilled Out>

The concentrations of 1,6-hexanediol, neopentyl glycol, neopentyl carbonate and isosorbide in the distillate by polymerization were obtained by dissolving the product in $CDCl_3$, measuring 400 MHz $^1$H-NMR (AL-400, manufactured by JEOL), and calculating the concentration from the integrated value of the signal of each component.

<Phenoxide Terminal Amount, Ether Bond Amount, Diphenyl Carbonate Amount, Dihydroxy Compound Amount, Neopentyl Carbonate Amount and Phenol Amount>

These amounts were obtained by dissolving the product in $CDCl_3$ and measuring 400 MHz $^1$H-NMR (AL-400, manufactured by JEOL) and calculating the amount from the integrated value of the signal of each component. At this time, the detection limit is 100 ppm in terms of the weight of diphenyl carbonate, dihydroxy compound, neopentyl carbonate or phenol based on the weight of the entire sample. The proportion of phenoxide terminal was determined from the ratio between the integrated value for one proton portion of phenoxide terminal and the integrated value for one proton portion of the entire terminal, and the detection limit of phenoxide terminal is 0.05% based on the entire terminal. Also, the proportion of ether bond was determined from the ratio of the integrated value of one proton potion bonded to carbon at the $\alpha$-position of ether bond to the sum of the integrated value for one proton portion bonded to carbon at the $\alpha$-position of ether bond and the integrated value of one proton portion bonded to carbon at the $\alpha$-position of carbonate bond, and the detection limit of ether bond is 0.05%.

<ISB/16HD>

Each ratio is determined from the integrated value in the following chemical shift on the NMR chart. Incidentally, the chemical shift value sometimes slightly varies according to the composition, and in this case, the way of obtaining the integrated value may be appropriately changed.

Integrated value of $\delta$5.22 to 4.98 ppm = a
Integrated value of $\delta$4.79 to 4.61 ppm = b
Integrated value of $\delta$4.61 to 4.47 ppm = c
Integrated value of $\delta$3.68 to 3.51 ppm = d
Integrated value of $\delta$2.73 to 2.66 ppm = e
Integrated value of $\delta$1.52 to 1.30 ppm = f

The structure of the chain terminal derived from ISB has two types, and these terminals are designated as "ISB terminal 1" and "ISB terminal 2", respectively. Also, the ISB-derived structural moiety in the polycarbonate polyol except for the terminal is designated as "in-ISB". Similarly, with respect to 16HD, the terminal and the moiety are designated as "16HD terminal" and "in-16HD", respectively. Considering the number of protons in each part, the number of terminals or moieties in each compound is calculated by the following formulae:

$$(ISB)\ terminal\ 1 = b - e$$

$$in\text{-}(ISB) = c - (ISB)\ terminal\ 1$$

$$(ISB)\ terminal\ 2 = a - (ISB)\ terminal\ 1 - in\text{-}(ISB)\times 2$$

$$(16HD)\ terminal = (d - e - (ISB)\ terminal\ 1)\div 2$$

$$in\text{-}(16HD) = (f - (16HD)\ terminal\times 4)\div 4$$

From these values, the proportions of (in-(ISB) + (ISB) terminal 1 + (ISB) terminal 2) and (in-(16HD) + (16HD) terminal) were compared, and the ratio of total was determined.

<NPG/16HD>

Each ratio is determined from the integrated value in the following chemical shift on the NMR chart. Incidentally, the chemical shift value sometimes slightly varies according to the composition, and in this case, the way of determining the integrated value may be appropriately changed.

Integrated value of δ4.25 to 4.05 ppm = g
Integrated value of δ4.05 to 3.87 ppm = h
Integrated value of δ3.70 to 3.57 ppm = i
Integrated value of δ3.41 to 3.30 ppm = j
Integrated value of δ1.15 to 1.12 ppm = k

The terminal derived from NPG is designated as "NPG terminal". Also, the NPG-derived structural moiety in the polycarbonate polyol except for the terminal is designated as "in-NPG". Similarly, with respect to 16H, the terminal and the moiety are designated as "16HD terminal" and "in-16HD", respectively. Considering the number of protons in each part, the number of terminals or moieties in each compound is calculated by the following formulae:

$$NPG\ terminal = j\div 2$$

$$in\text{-}NPG = (h - j)\div 4$$

$$16HD\ terminal = i\div 2$$

$$in\text{-}16HD = (g - 16HD\ terminal\times 2 - k\div 6\times 4)\div 4$$

From these values, the proportions of (in-NPG + NPG terminal) and (in-16HD + 16HD terminal) were compared, and the ratio relative to the entirety was determined.

<Number Average Molecular Weight>

The number average molecular weight (Mn) was calculated from the number of protons in the terminal derived from each dihydroxy compound in the polycarbonate above, the number of protons in the moiety except for the terminal, and the molecular weight of each moiety.

<APHA Value>

This value was measured by comparison with the standard solution put in a colorimetric tube in accordance with JIS K0071-1 (1998).

<Hydroxyl Value>

This value was measured and calculated by the method described in JIS K1557-1 (2007).

<Turbidity>

Using an integrating sphere turbidimeter PT-200 manufactured by Mitsubishi Chemical Corporation), a 50% methylene chloride solution of polycarbonate diol was put in a 10-mm cell and the turbidity was measured with use of a polystyrene calibration curve previously installed in the device.

<Catalyst Amount>

About 0.1 g of a polycarbonate polyol product was measured and dissolved in 4 mL of acetonitrile, and 20 mL of pure water was added to precipitate the polycarbonate polyol. The precipitated polycarbonate polyol was removed by filtration, and the solution after filtration was diluted with pure water to the predetermined concentration. Thereafter, the metallic ion concentration was analyzed by ion chromatography. Incidentally, the metallic ion concentration of acetonitrile used as the solvent was measured as a blank value, and the value obtained by subtracting the metallic ion concentration in the solvent portion was taken as the catalyst metallic ion concentration of the polycarbonate polyol. The measurement conditions are as shown in Table 1 below. The magnesium concentration was determined using the analysis results and the previously prepared calibration curve.

[Table 1]

Table 1: Metallic Ion Concentration Measurement Conditions

| | Cation |
|---|---|
| Analyzer | Dionex Japan [DX-320]<br>Chromatopac: Shimadzu Corporation [C-R7A] |
| Separation column | IonPac CS12A |
| Guard column | IonPac CG12A |
| Flow rate | 1.0 mL/min |
| Inj ection amount | 1.5 mL |
| Pressure | 960 to 990 psi |
| OVEN TEMP | 35°C |
| Sensitivity of detector | RANGE 200 μS |
| Suppressor | CSRS, current value: 60 mA |
| Eluent | 20 mmol/L, methanesulfonic acid |
| Retention time | 10.9 min |

<Filtration>

Filtration after the completion of polymerization reaction was performed using Stainless Housing: 1TS Type manufactured by ADVANTEC and a stainless mesh cartridge filter: TMC-2-STCH.

<Thin-Film Distillation Apparatus>

A molecular distillation apparatus, Model MS-300, manufactured by Sibata Scientific Technology Ltd. with an internal condenser having a diameter of 50 mm, a height of 200 mm and an area of 0.0314 $m^2$ and a jacket was used.

[Example 1]

(Reaction of First Step)

Into a 180-L polymerization reaction tank equipped with a heat medium jacket, a stirrer, a refluxer, a condenser, a distillate tank, a cold trap and a vacuum pump, 12.13 kg of 1,6-hexanediol (16HD, boiling point: 253°C), 15.00 kg of isosorbide (ISB), 32.87 kg of diphenyl carbonate, and 11.0 mL of an aqueous magnesium acetate tetrahydrate solution (concentration: 200 g/L, magnesium acetate tetrahydrate: 2.2 g) were charged, and the reactor was purged with a nitrogen gas. Steam at about 100°C was flowed as a coolant to the refluxer, and warm water at about 45°C was flowed as a coolant to the condenser. First, an oil was circulated to the jacket of the polymerization reaction tank to heat and dissolve the contents and after confirming that the contents were almost completely dissolved at an internal temperature of 100°C, stirring was started. Thereafter, when the internal temperature reached 130°C, the pressure was reduced to 6.65 kPa over 5 minutes, and phenol occurring as a byproduct was caused to start distilling out. Subsequently, while distilling out the byproduct phenol by keeping the internal temperature at 139°C, the pressure was reduced to 4.00 kPa over 120 minutes, and while further distilling out the byproduct phenol, the reaction was continued for 25 minutes. At this time, the temperature of the heat medium oil of the polymerization reaction tank was from 138 to 146°C. The distillate volume at this stage was 80% of the theoretical phenol production.

(Reaction of Second Step)

In a nitrogen atmosphere, the reaction solution obtained in the first step was transferred to a 180-L polymerization reaction tank equipped with a heat medium jacket, a stirrer, a refluxer, a condenser, a distillate tank, a cold trap and a vacuum pump. A heat medium oil at 170°C was circulated to the jacket of the polymerization reaction tank, steam at about 100°C was flowed as a coolant to the refluxer, and warm water at about 45°C was flowed as a coolant to the condenser. After transferring the reaction solution of the first step, the pressure was reduced to 4.00 kPa over 5 minutes. At this stage, the temperature of the reaction solution reached 160°C, and phenol occurring as a byproduct started distilling out. Thereafter, while reducing the pressure to 0.40 kPa over 60 minutes and removing phenol and unreacted dihydroxy compound by distillation, the reaction was performed. Subsequently, the reaction was continued at 160°C and 0.40 kPa for 15 minutes, and filtration through a filter was performed to obtain a polycarbonate polyol. This result is shown in Table 2 below. The yield of the polycarbonate polyol product obtained was 30.44 kg (percentage yield: 97.8%).

(Reaction Results)

The property of the polycarbonate polyol product obtained was a transparent solid at ordinary temperature, the molecular weight was 900, APHA was 50, the ratio of total was 16HD/ISB=50/50, the content of isosorbide as a dihydroxy compound was 2.15 wt%, the phenol content was 0.78 wt%, and an ether bond except for phenoxide terminal and isosorbide skeleton was not detected. Also, the residual diphenyl carbonate was not more than the quantitative limit (0.01 wt% or less). The monomer distillate volume was 2.5 wt%.

[Example 2]

(Reaction of First Step)

Into a 180-L polymerization reaction tank equipped with a heat medium jacket, a stirrer, a refluxer, a condenser, a distillate tank, a cold trap and a vacuum pump, 12.33 kg of 1,6-hexanediol (16HD), 15.25 kg of isosorbide (ISB), 32.43 kg of diphenyl carbonate, and 2.2 mL of an aqueous magnesium acetate tetrahydrate solution (concentration: 200 g/L, magnesium acetate tetrahydrate: 0.44 g) were charged, and the reactor was purged with a nitrogen gas. Without flowing steam to the refluxer, warm water at about 45°C was flowed as a coolant to the condenser. First, an oil was circulated to the jacket of the polymerization reaction tank to heat and dissolve the contents and after confirming that the contents were almost completely dissolved at an internal temperature of 100°C, stirring was started. Thereafter, when the internal temperature reached 146°C, the pressure was reduced to 18.7 kPa over 5 minutes, and phenol occurring as a byproduct was caused to start distilling out. Subsequently, while distilling out the byproduct phenol by keeping the internal temperature at 165°C, the pressure was reduced to 9.33 kPa over 120 minutes, and the byproduct phenol was further distilled

out. At this time, the temperature of the heat medium oil of the polymerization reaction tank was from 167 to 179°C. The distillate volume at this stage was 80% of the theoretical phenol production.

(Reaction of Second Step)

In a nitrogen atmosphere, the reaction solution obtained in the first step was transferred to a 180-L polymerization reaction tank equipped with a heat medium jacket, a stirrer, a refluxer, a condenser, a distillate tank, a cold trap and a vacuum pump. A heat medium oil at 180°C was circulated to the jacket of the polymerization reaction tank, steam at about 100°C was flowed as a coolant to the refluxer, and warm water at about 45°C was flowed as a coolant to the condenser. After transferring the reaction solution of the first step, the pressure was reduced to 9.33 kPa over 5 minutes. At this stage, the temperature of the reaction solution reached 167°C, and phenol occurring as a byproduct started distilling out. Thereafter, while reducing the pressure to 0.40 kPa over 60 minutes and removing phenol and unreacted dihydroxy compound by distillation, the reaction was performed. Subsequently, the reaction was continued at 160°C and 0.40 kPa for 35 minutes, and filtration through a filter was performed to obtain a polycarbonate polyol. This result is shown in Table 2 below. The yield of the polycarbonate polyol product obtained was 30.4 kg (percentage yield: 96.3%).

(Reaction Results)

The property of the polycarbonate polyol product obtained was a transparent liquid at ordinary temperature, the molecular weight was 770, APHA was 50, the ratio of total was 16HD/ISB=50/50, the content of isosorbide as a dihydroxy compound was 4.17 wt%, the phenol content was 0.64 wt%, and an ether bond except for phenoxide terminal and isosorbide skeleton was not detected. Also, the residual diphenyl carbonate was not more than the quantitative limit (0.01 wt% or less). The monomer distillate volume was 4.4 wt%.

[Example 3]

(Reaction of First Step)

Into a 180-L polymerization reaction tank equipped with a heat medium jacket, a stirrer, a refluxer, a condenser, a distillate tank, a cold trap and a vacuum pump, 14.52 kg of 1,6-hexanediol (16HD), 17.95 kg of isosorbide (ISB), 37.53 kg of diphenyl carbonate, and 5.3 mL of an aqueous magnesium acetate tetrahydrate solution (concentration: 200 g/L, magnesium acetate tetrahydrate: 1.06 g) were charged, and the reactor was purged with a nitrogen gas. Without flowing steam to the refluxer, warm water at about 45°C was flowed as a coolant to the condenser. First, an oil was circulated to the jacket of the polymerization reaction tank to heat and dissolve the contents and after confirming that the contents were almost completely dissolved at an internal temperature of 100°C, stirring was started. Thereafter, when the internal temperature reached 151°C, the pressure was reduced to 17.3 kPa over 5 minutes, and phenol occurring as a byproduct was caused to start distilling out. Subsequently, while distilling out the byproduct phenol by keeping the internal temperature at 160°C, the pressure was reduced to 9.66 kPa over 115 minutes, and the byproduct phenol was further distilled out. At this time, the temperature of the heat medium oil of the polymerization reaction tank was from 168 to 179°C. The distillate volume at this stage was 80% of the theoretical phenol production.

(Reaction of Second Step)

In a nitrogen atmosphere, the reaction solution obtained in the first step was transferred to a 180-L polymerization reaction tank equipped with a heat medium jacket, a stirrer, a refluxer, a condenser, a distillate tank, a cold trap and a vacuum pump. A heat medium oil at 175°C was circulated to the jacket of the polymerization reaction tank, steam at about 100°C was flowed as a coolant to the refluxer, and warm water at about 45°C was flowed as a coolant to the condenser. After transferring the reaction solution of the first step, the pressure was reduced to 9.33 kPa over 5 minutes. At this stage, the temperature of the reaction solution reached 164°C, and phenol occurring as a byproduct started distilling out. Thereafter, while reducing the pressure to 0.40 kPa over 60 minutes and removing phenol and unreacted dihydroxy compound by distillation, the reaction was performed. Subsequently, the reaction was continued at 160°C and 0.40 kPa for 75 minutes, and filtration through a filter was performed to obtain a polycarbonate polyol. This result is shown in Table 2 below. The yield of the polycarbonate polyol product obtained was 35.6 kg (percentage yield: 96.2%).

(Reaction Results)

The property of the polycarbonate polyol product obtained was a transparent liquid at ordinary temperature, the molecular weight was 790, APHA was 40, the ratio of total was 16HD/ISB=52/48, the content of isosorbide as a

dihydroxy compound was 7.35 wt%, the phenol content was 0.30 wt%, and an ether bond except for phenoxide terminal and isosorbide skeleton was not detected. Also, the residual diphenyl carbonate was not more than the quantitative limit (0.01 wt% or less). The monomer distillate volume was 4.0 wt%.

[Example 4]

(Reaction)

Into a 180-L polymerization reaction tank equipped with a heat medium jacket, a stirrer, a refluxer, a condenser, a distillate tank, a cold trap and a vacuum pump, 14.52 kg of 1,6-hexanediol (16HD), 17.95 kg of isosorbide (ISB), 37.53 kg of diphenyl carbonate, and 2.6 mL of an aqueous magnesium acetate tetrahydrate solution (concentration: 200 g/L, magnesium acetate tetrahydrate: 0.52 g) were charged, and the reactor was purged with a nitrogen gas. Steam at about 100°C was flowed as a coolant to the refluxer, and warm water at about 45°C was flowed as a coolant to the condenser. First, an oil was circulated to the jacket of the polymerization reaction tank to heat and dissolve the contents and after confirming that the contents were almost completely dissolved at an internal temperature of 100°C, stirring was started. Thereafter, when the internal temperature reached 145°C, the pressure was reduced to 17.3 kPa over 5 minutes, and phenol occurring as a byproduct was caused to start distilling out. Subsequently, while distilling out the byproduct phenol by keeping the internal temperature at 160°C, the pressure was reduced to 9.00 kPa over 115 minutes, and the byproduct phenol was further distilled out. Furthermore, while reducing the pressure to 0.40 kPa over 60 minutes and removing phenol and unreacted dihydroxy compound by distillation, the reaction was performed. The reaction was further continued at 160°C and 0.40 kPa for 60 minutes, and filtration through a filter was performed to obtain a polycarbonate polyol. This result is shown in Table 2 below. The yield of the polycarbonate polyol product obtained was 35.5 kg (percentage yield: 95.8%).

(Reaction Results)

The property of the polycarbonate polyol product obtained was a transparent liquid at ordinary temperature, the molecular weight was 770, APHA was 50, the ratio of total was 16HD/ISB=51/49, the content of isosorbide as a dihydroxy compound was 5.67 wt%, the phenol content was 0.65 wt%, and an ether bond except for phenoxide terminal and isosorbide skeleton was not detected. Also, the residual diphenyl carbonate was not more than the quantitative limit (0.01 wt% or less). The monomer distillate volume was 4.7 wt%.

[Comparative Example 1]

(Reaction of First Step)

Into a 180-L polymerization reaction tank equipped with a heat medium jacket, a stirrer, a refluxer, a condenser, a distillate tank, a cold trap and a vacuum pump, 14.52 kg of 1,6-hexanediol (16HD), 17.95 kg of isosorbide (ISB), 37.53 kg of diphenyl carbonate, and 0.53 mL of an aqueous magnesium acetate tetrahydrate solution (concentration: 200 g/L, magnesium acetate tetrahydrate: 0.11 g) were charged, and the reactor was purged with a nitrogen gas. Without flowing steam to the refluxer, warm water at about 45°C was flowed as a coolant to the condenser. First, an oil was circulated to the jacket of the polymerization reaction tank to heat and dissolve the contents and after confirming that the contents were almost completely dissolved at an internal temperature of 100°C, stirring was started. Thereafter, when the internal temperature reached 171°C, the pressure was reduced to 10.0 kPa over 5 minutes, and phenol occurring as a byproduct was caused to start distilling out. Subsequently, while distilling out the byproduct phenol by keeping the internal temperature at 180°C, the pressure was reduced to 6.67 kPa over 65 minutes, and the byproduct phenol was further distilled out. At this time, the temperature of the heat medium oil of the polymerization reaction tank was from 188 to 195°C. The distillate volume at this stage was 80% of the theoretical phenol production.

(Reaction of Second Step)

In a nitrogen atmosphere, the reaction solution obtained in the first step was transferred to a 180-L polymerization reaction tank equipped with a heat medium jacket, a stirrer, a refluxer, a condenser, a distillate tank, a cold trap and a vacuum pump. A heat medium oil at 190°C was circulated to the jacket of the polymerization reaction tank and without flowing steam to the refluxer, warm water at about 45°C was flowed as a coolant to the condenser. After transferring the reaction solution of the first step, the pressure was reduced to 6.67 kPa over 5 minutes. At this stage, the temperature of the reaction solution reached 182°C, and phenol occurring as a byproduct started distilling out. Thereafter, while reducing the pressure to 0.40 kPa over 60 minutes and removing phenol and unreacted dihydroxy compound by distillation, the reaction was performed. Subsequently, the reaction was continued at 185°C and 0.10 kPa for 55 minutes, and filtration through a filter was performed to obtain a polycarbonate polyol. This result is shown in Table 2 below. The yield of the polycarbonate polyol product obtained was 28.4 kg (percentage yield: 86.1%).

(Reaction Results)

The property of the polycarbonate polyol product obtained was a transparent liquid at ordinary temperature, the molecular weight was 890, APHA was 40, the ratio of total was 16HD/ISB=43/57, the content of isosorbide as a dihydroxy compound was 1.9 wt%, the phenol content was 0.12 wt%, and an ether bond except for phenoxide terminal and isosorbide skeleton was not detected. Also, the residual diphenyl carbonate was not more than the quantitative limit (0.01 wt% or less). The monomer distillate volume was 15.8 wt%.

[Comparative Example 2]

(Reaction)

Into a 180-L polymerization reaction tank equipped with a heat medium jacket, a stirrer, a refluxer, a condenser, a distillate tank, a cold trap and a vacuum pump, 14.52 kg of 1,6-hexanediol (16HD), 17.95 kg of isosorbide (ISB), 37.53 kg of diphenyl carbonate, and 5.3 mL of an aqueous magnesium acetate tetrahydrate solution (concentration: 200 g/L, magnesium acetate tetrahydrate: 1.06 g) were charged, and the reactor was purged with a nitrogen gas. Without flowing steam to the refluxer, warm water at about 45°C was flowed as a coolant to the condenser. First, an oil was circulated to the jacket of the polymerization reaction tank to heat and dissolve the contents and after confirming that the contents were almost completely dissolved at an internal temperature of 100°C, stirring was started. Thereafter, when the heat medium oil was at 164°C and the internal temperature reached 160°C, the pressure was reduced to 30.0 kPa over 5 minutes, and phenol occurring as a byproduct was caused to start distilling out. Subsequently, while distilling out the byproduct phenol by keeping the heat medium oil at 164°C and the internal temperature at 160°C, the pressure was gradually reduced with care not to lower the internal temperature, and the byproduct phenol was further distilled out. As a result, the pressure was reduced to 0.4 kPa over 900 minutes. The reaction was further continued at 0.4 kPa for 55 minutes, and filtration through a filter was performed to obtain a polycarbonate polyol. This result is shown in Table 2 below. The yield of the polycarbonate polyol product obtained was 36.6 kg (percentage yield: 98.8%).

(Reaction Results)

The property of the polycarbonate polyol product obtained was a transparent liquid at ordinary temperature, the molecular weight was 700, APHA was 300, the ratio of total was 16HD/ISB=53/47, the content of isosorbide as a dihydroxy compound was 6.0 wt%, the phenol content was 0.45 wt%, and an ether bond except for phenoxide terminal and isosorbide skeleton was not detected. Also, the residual diphenyl carbonate was not more than the quantitative limit (0.01 wt% or less). The monomer distillate volume was 0.4 wt%.

[Comparative Example 3]

Into a 5-L glass-made separable flask equipped with a heat medium jacket, a stirrer, a distillate trap, a cold trap and a vacuum pump, 707.3 g of 1,6-hexanediol (16HD), 777.7 g of isosorbide (ISB), 1,843.4 g of diphenyl carbonate, and 13.2 mL of an aqueous magnesium acetate tetrahydrate solution (concentration: 8.4 g/L, magnesium acetate tetrahydrate: 111 mg) were charged, and the flask was purged with a nitrogen gas. First, the temperature was raised to an internal temperature of 130°C to heat and dissolve the contents and after the completion of temperature rising and dissolving, the pressure was reduced to 5.33 kPa over 5 minutes. Subsequently, the pressure was reduced from 5.33 kPa to 4.00 kPa over 65 minutes at an internal temperature of 130°C and then, while distilling out the byproduct phenol, the reaction was performed at 4.00 kPa for 80 minutes. Furthermore, while reducing the pressure to 0.40 kPa over 140 minutes, the inner temperature was lowered to 160°C, and while removing phenol and unreacted dihydroxy compound by distillation, the reaction was performed to obtain a polycarbonate polyol. This result is shown in Table 2 below. The yield of the polycarbonate polyol product obtained was 1,641.4 g (percentage yield: 96.5%).

(Reaction Results)

The property of the polycarbonate polyol product obtained was a transparent solid at ordinary temperature, the molecular weight was 930, APHA was 60, the ratio of total was 16HD/ISB=53/47, the content of isosorbide as a dihydroxy compound was 3.78 wt%, the phenol content was 1.14 wt%, and an ether bond except for phenoxide terminal and

isosorbide skeleton was not detected. Also, the residual diphenyl carbonate was not more than the quantitative limit (0.01 wt% or less). The monomer distillate volume was 4.8 wt%.

The reaction results of Examples 1 to 4 and Comparative Examples 1 to 3 are shown together in Table 2.

[Example 5]

(Reaction of First Step)

The reaction was performed by the same method as in Example 1 except that 11.92 kg of 1,6-hexanediol (16HD), 15.76 kg of neopentyl glycol (NPG, boiling point: 210°C), 42.32 kg of diphenyl carbonate, and 13.5 mL of an aqueous magnesium acetate tetrahydrate solution (concentration: 200 g/L, magnesium acetate tetrahydrate: 2.7 g) were used as raw materials and the stirring was started after confirming that the contents were almost completely dissolved at an internal temperature of 105°C. At this time, the temperature of the heat medium oil of the polymerization reaction tank was from 141 to 147°C.

(Reaction of Second Step)

The reaction was performed by the same method as in Example 1. The yield of the polycarbonate polyol product obtained was 31.7 kg (percentage yield: 96.6%). This result is shown in Table 3 below.

(Reaction Results)

The property of the polycarbonate polyol product obtained was a transparent viscous liquid at ordinary temperature, the molecular weight was 810, APHA was 30, the ratio of total was 16HD/NPG=43/57, the content of neopentyl glycol as a dihydroxy compound was 2.15 wt%, the content of neopentyl carbonate as a byproduct was 1.79 wt%, the phenol content was 1.79 wt%, and a phenoxide terminal and an ether bond were not detected. Also, the residual diphenyl carbonate was not more than the quantitative limit (0.01 wt% or less). The monomer distillate volume was 7.6 wt%.

[Example 6]

(Reaction of First Step)

The reaction was performed by the same method as in Example 1 except that 11.92 kg of 1,6-hexanediol (16HD), 15.76 kg of neopentyl glycol (NPG), 42.32 kg of diphenyl carbonate, and 13.5 mL of an aqueous magnesium acetate tetrahydrate solution (concentration: 200 g/L, magnesium acetate tetrahydrate: 2.7 g) were used as raw materials, the stirring was started after confirming that the contents were almost completely dissolved at an internal temperature of 105°C, and steam was not flowed to the refluxer. At this time, the temperature of the heat medium oil of the polymerization reaction tank was from 136 to 146°C.

(Reaction of Second Step)

The reaction was performed by the same method as in Example 1. The yield of the polycarbonate polyol product obtained was 31.2 kg (percentage yield: 95.1%). This result is shown in Table 3 below.

(Reaction Results)

The property of the polycarbonate polyol product obtained was a transparent viscous liquid at ordinary temperature, the molecular weight was 860, APHA was 20, the ratio of total was 16HD/NPG=44/56, the content of neopentyl glycol as a dihydroxy compound was 0.99 wt%, the content of neopentyl carbonate as a byproduct was 2.41 wt%, the phenol content was 0.62 wt%, and a phenoxide terminal and an ether bond were not detected. Also, the residual diphenyl carbonate was not more than the quantitative limit (0.01 wt% or less). The monomer distillate volume was 8.2 wt%.

[Example 7]

(Reaction of First Step)

Into a 180-L polymerization reaction tank equipped with a heat medium jacket, a stirrer, a refluxer, a condenser, a distillate tank, a cold trap and a vacuum pump, 11.19 kg of 1,6-hexanediol (16HD), 14.80 kg of neopentyl glycol (NPG),

44.01 kg of diphenyl carbonate, and 2.5 mL of an aqueous magnesium acetate tetrahydrate solution (concentration: 200 g/L, magnesium acetate tetrahydrate: 0.50 g) were charged, and the reactor was purged with a nitrogen gas. Without flowing steam to the refluxer, warm water at about 45°C was flowed as a coolant to the condenser. First, an oil was circulated to the jacket of the polymerization reaction tank to heat and dissolve the contents and after confirming that the contents were almost completely dissolved at an internal temperature of 105°C, stirring was started. Thereafter, when the internal temperature reached 131°C, the pressure was reduced to 18.0 kPa over 5 minutes, and phenol occurring as a byproduct was caused to start distilling out. Subsequently, while distilling out the byproduct phenol by keeping the internal temperature at 160°C, the pressure was reduced to 8.83 kPa over 110 minutes, and the byproduct phenol was further distilled out. At this time, the temperature of the heat medium oil of the polymerization reaction tank was from 169 to 176°C. The distillate volume at this stage was 80% of the theoretical phenol production.

(Reaction of Second Step)

In a nitrogen atmosphere, the reaction solution obtained in the first step was transferred to a 180-L polymerization reaction tank equipped with a heat medium jacket, a stirrer, a refluxer, a condenser, a distillate tank, a cold trap and a vacuum pump. A heat medium oil at 180°C was circulated to the jacket of the polymerization reaction tank, steam at about 100°C was flowed as a coolant to the refluxer, and warm water at about 45°C was flowed as a coolant to the condenser. After transferring the reaction solution of the first step, the pressure was reduced to 8.00 kPa over 5 minutes. At this stage, the temperature of the reaction solution reached 170°C, and phenol occurring as a byproduct started distilling out. Thereafter, while reducing the pressure to 0.40 kPa over 60 minutes and removing phenol and unreacted dihydroxy compound by distillation, the reaction was performed. Subsequently, the reaction was continued at 160°C and 0.40 kPa for 145 minutes, and filtration through a filter was performed to obtain a polycarbonate polyol. This result is shown in Table 3 below. The yield of the polycarbonate polyol product obtained was 27.9 kg (percentage yield: 89.0%).

(Reaction Results)

The property of the polycarbonate polyol product obtained was a transparent viscous liquid at ordinary temperature, the molecular weight was 1,960, APHA was 30, the ratio of total was 16HD/NPG=45/55, the content of neopentyl glycol as a dihydroxy compound was 0.17 wt%, the content of neopentyl carbonate as a byproduct was 2.81 wt%, the phenol content was 0.09 wt%, and a phenoxide terminal and an ether bond were not detected. Also, the residual diphenyl carbonate was not more than the quantitative limit (0.01 wt% or less). The monomer distillate volume was 8.9 wt%.

[Example 8]

(Reaction of First Step)

Into a 180-L polymerization reaction tank equipped with a heat medium jacket, a stirrer, a refluxer, a condenser, a distillate tank, a cold trap and a vacuum pump, 10.90 kg of 1,6-hexanediol (16HD), 14.41 kg of neopentyl glycol (NPG), 44.69 kg of diphenyl carbonate, and 2.5 mL of an aqueous magnesium acetate tetrahydrate solution (concentration: 200 g/L, magnesium acetate tetrahydrate: 0.50 g) were charged, and the reactor was purged with a nitrogen gas. Without flowing steam to the refluxer, warm water at about 45°C was flowed as a coolant to the condenser. First, an oil was circulated to the jacket of the polymerization reaction tank to heat and dissolve the contents and after confirming that the contents were almost completely dissolved at an internal temperature of 105°C, stirring was started. Thereafter, when the internal temperature reached 147°C, the pressure was reduced to 18.7 kPa over 5 minutes, and phenol occurring as a byproduct was caused to start distilling out. Subsequently, while distilling out the byproduct phenol by keeping the internal temperature at 160°C, the pressure was reduced to 9.33 kPa over 120 minutes, and while further distilling out the byproduct phenol, the reaction was continued for 5 minutes. At this time, the temperature of the heat medium oil of the polymerization reaction tank was from 168 to 174°C. The distillate volume at this stage was 80% of the theoretical phenol production.

(Reaction of Second Step)

In a nitrogen atmosphere, the reaction solution obtained in the first step was transferred to a 180-L polymerization reaction tank equipped with a heat medium jacket, a stirrer, a refluxer, a condenser, a distillate tank, a cold trap and a vacuum pump. A heat medium oil at 201°C was circulated to the jacket of the polymerization reaction tank, steam at about 100°C was flowed as a coolant to the refluxer, and warm water at about 45°C was flowed as a coolant to the condenser. After transferring the reaction solution of the first step, the pressure was reduced to 9.33 kPa over 5 minutes. At this stage, the temperature of the reaction solution reached 173°C, and phenol occurring as a byproduct started

distilling out. Thereafter, while reducing the pressure to 0.40 kPa over 60 minutes and removing phenol and unreacted dihydroxy compound by distillation, the reaction was performed. Subsequently, the reaction was continued at 160°C and 0.40 kPa for 35 minutes, and filtration through a filter was performed to obtain a polycarbonate polyol. This result is shown in Table 3 below. The yield of the polycarbonate polyol product obtained was 28.9 kg (percentage yield: 94.0%).

(Reaction Results)

The property of the polycarbonate polyol product obtained was a transparent viscous liquid at ordinary temperature, the molecular weight was 2,010, APHA was 20, the ratio of total was 16HD/NPG=44/56, the content of neopentyl glycol as a dihydroxy compound was 0.15 wt%, the content of neopentyl carbonate as a byproduct was 3.92 wt%, the phenol content was 0.24 wt%, and a phenoxide terminal and an ether bond were not detected. Also, the residual diphenyl carbonate was not more than the quantitative limit (0.01 wt% or less). The monomer distillate volume was 5.1 wt%.

[Example 9]

(Reaction)

Into a 180-L polymerization reaction tank equipped with a heat medium jacket, a stirrer, a refluxer, a condenser, a distillate tank, a cold trap and a vacuum pump, 10.95 kg of 1,6-hexanediol (16HD), 14.48 kg of neopentyl glycol (NPG), 44.56 kg of diphenyl carbonate, and 5.0 mL of an aqueous magnesium acetate tetrahydrate solution (concentration: 200 g/L, magnesium acetate tetrahydrate: 1.00 g) were charged, and the reactor was purged with a nitrogen gas. Steam at about 100°C was flowed as a coolant to the refluxer, and warm water at about 45°C was flowed as a coolant to the condenser. First, an oil was circulated to the jacket of the polymerization reaction tank to heat and dissolve the contents and after confirming that the contents were almost completely dissolved at an internal temperature of 110°C, stirring was started. Thereafter, when the internal temperature reached 152°C, the pressure was reduced to 17.3 kPa over 5 minutes, and phenol occurring as a byproduct was caused to start distilling out. Subsequently, while distilling out the byproduct phenol by keeping the internal temperature at 160°C, the pressure was reduced to 10.0 kPa over 90 minutes, and the byproduct phenol was further distilled out. Furthermore, while reducing the pressure to 0.40 kPa over 60 minutes and removing phenol and unreacted dihydroxy compound by distillation, the reaction was performed. The reaction was further continued at 160°C and 0.40 kPa for 150 minutes, and filtration through a filter was performed to obtain a polycarbonate polyol. This result is shown in Table 3 below. The yield of the polycarbonate polyol product obtained was 27.7 kg (percentage yield: 89.8%).

(Reaction Results)

The property of the polycarbonate polyol product obtained was a transparent viscous liquid at ordinary temperature, the molecular weight was 1,930, APHA was 30, the ratio of total was 16HD/NPG=45/55, the content of neopentyl glycol as a dihydroxy compound was 0.15 wt%, the content of neopentyl carbonate as a byproduct was 3.13 wt%, the phenol content was 0.05 wt%, and a phenoxide terminal and an ether bond were not detected. Also, the residual diphenyl carbonate was not more than the quantitative limit (0.01 wt% or less). The monomer distillate volume was 7.6 wt%.

[Comparative Example 4]

(Reaction)

The reaction was performed by the same method as in Comparative Example 1 except that 11.31 kg of 1,6-hexanediol (16HD), 14.95 kg of neopentyl glycol (NPG), 43.74 kg of diphenyl carbonate, and 0.51 mL of an aqueous magnesium acetate tetrahydrate solution (concentration: 200 g/L, magnesium acetate tetrahydrate: 0.10 g) were used as raw materials and the contents were almost completely dissolved at an internal temperature of 110°C. The heat medium temperature, internal temperature and result at this time are shown in Table 3 below. The yield of the polycarbonate polyol product obtained was 25.5 kg (percentage yield: 80.8%).

(Reaction Results)

The property of the polycarbonate polyol product obtained was a transparent viscous liquid at ordinary temperature, the molecular weight was 2,830, APHA was 30, the ratio of total was 16HD/NPG=49/51, the content of neopentyl glycol as a dihydroxy compound was 0.40 wt%, the content of neopentyl carbonate as a byproduct was 4.01 wt%, the phenol content was 0.32 wt%, and a phenoxide terminal and an ether bond were not detected. Also, the residual diphenyl

carbonate was not more than the quantitative limit (0.01 wt% or less). The monomer distillate volume was 18.5 wt%.

[Comparative Example 5]

(Reaction)

The reaction was performed by the same method as in Comparative Example 2 except that 10.74 kg of 1,6-hexanediol (16HD), 14.20 kg of neopentyl glycol (NPG), 45.06 kg of diphenyl carbonate, and 4.9 mL of an aqueous magnesium acetate tetrahydrate solution (concentration: 200 g/L, magnesium acetate tetrahydrate: 0.98 g) were used as raw materials and the contents were almost completely dissolved at an internal temperature of 110°C. This results is shown in Table 3 below. The yield of the polycarbonate polyol product obtained was 29.9 kg (percentage yield: 98.3%).

(Reaction Results)

The property of the polycarbonate polyol product obtained was a transparent viscous liquid at ordinary temperature, the molecular weight was 2,030, APHA was 250, the ratio of total was 16HD/NPG=42/58, the content of neopentyl glycol as a dihydroxy compound was 0.16 wt%, the content of neopentyl carbonate as a byproduct was 2.91 wt%, the phenol content was 0.74 wt%, and a phenoxide terminal and an ether bond were not detected. Also, the residual diphenyl carbonate was not more than the quantitative limit (0.01 wt% or less). The monomer distillate volume was 0.6 wt%.

[Comparative Example 6]

Into a 5-L glass-made separable flask equipped with a heat medium jacket, a stirrer, a distillate trap, a cold trap and a vacuum pump, 424.4 g of 1,6-hexanediol (16HD), 374.0 g of neopentyl glycol (NPG), 1,201.6 g of diphenyl carbonate, and 9.2 mL of an aqueous magnesium acetate tetrahydrate solution (concentration: 8.4 g/L, magnesium acetate tetrahydrate: 77.3 mg) were charged, and the flask was purged with a nitrogen gas. First, the temperature was raised to an internal temperature of 130°C to heat and dissolve the contents. After the completion of temperature rising and dissolving, the pressure was reduced to 6.00 kPa over 5 minutes, and the reaction was performed at 130°C and 6.00 kPa for 330 minutes. Subsequently, the pressure was reduced to 4.0 kPa over 150 minutes and further reduced to 0.40 kPa over 30 minutes, and while raising the temperature to 160°C over 90 minutes and removing phenol and unreacted dihydroxy compound by distillation, the reaction was performed. This result is shown in Table 3 below. The yield of the polycarbonate polyol product obtained was 819.4 g (percentage yield: 86.8%).

(Reaction Results)

The property of the polycarbonate polyol product obtained was a transparent viscous liquid at ordinary temperature, the molecular weight was 850, APHA was 20, the ratio of total was 16HD/NPG=55/45, the content of neopentyl glycol as a dihydroxy compound was 0.03 wt%, the content of neopentyl carbonate as a byproduct was 0.28 wt%, the phenol content was 0.01 wt% or less, and a phenoxide terminal and an ether bond were not detected. Also, the residual diphenyl carbonate was not more than the quantitative limit (0.01 wt% or less). The monomer distillate volume was 13.1 wt%.

The reaction results of Examples 5 to 9 and Comparative Examples 4 to 6 are shown together in Table 3.

[Table 2]

Table 2: Production Conditions and Physical Properties of Polycarbonate Diol Obtained

| | | | | Example | | | | Comparative Example | | |
|---|---|---|---|---|---|---|---|---|---|---|
| | | | | 1 | 2 | 3 | 4 | 1 | 2 | 3 |
| Raw material | Dihydroxy compound | 16HD | mol% | 50 | 50 | 50 | 50 | 50 | 50 | 50 |
| | | ISB | | 50 | 50 | 50 | 50 | 50 | 50 | 50 |
| | | NPG | | | | | | | | |
| | Catalyst | Amount | μmol/ mol-diol | 50 | 10 | 20 | 10 | 2 | 20 | 50 |
| Reaction conditions | First step | Capacity of reaction tank | L | 180 | 180 | 180 | 180 | 180 | 180 | 5 |
| | | Maximum temperature of heat medium of reactor | °C | 146 | 179 | 175 | 184 | 195 | 164 | 170 |
| | | Temperature (internal temperature) of reaction solution | °C | 139 | 165 | 163 | 168 | 183 | 160 | 160 |
| | | Difference between maximum temperature of heat medium of reactor and internal temperature | °C | 7 | 14 | 12 | 16 | 12 | 4 | 10 |
| | | Temperature of heat medium entering reflux condenser | °C | 100 | air cool | air cool | 100 | air cool | air cool | none |
| | | Reaction time | min | 150 | 125 | 120 | 240 | 70 | 960 | 150 |
| | | Phenol distillate volume/ theoretical distillate volume | wt% | 80 | 80 | 80 | 100 | 80 | 99 | 102 |
| | Second step | Capacity of reaction tank | L | 180 | 180 | 180 | | 180 | | |
| | | Maximum temperature of heat medium of reactor | °C | 170 | 180 | 182 | | 192 | | |
| | | Temperature (internal temperature) of reaction solution | °C | 160 | 167 | 168 | | 185 | | |
| | | Difference between maximum temperature of heat medium of reactor and internal temperature | °C | 10 | 13 | 14 | | 7 | | |
| | | Temperature of heat medium entering reflux condenser | °C | 100 | 100 | 100 | | air cool | | |
| | | Reaction time | min | 80 | 100 | 140 | | 120 | | |
| | | Phenol distillate volume/ theoretical distillate volume | wt% | 19 | 18 | 16 | | 36 | | |
| | All steps | Reaction time | min | 230 | 225 | 260 | 240 | 190 | 960 | 290 |
| | | Amount of monomer distilled out | wt% | 2.5 | 4.4 | 4.0 | 4.7 | 15.8 | 0.4 | 4.8 |

Table 2 (continued): Production Conditions and Physical Properties of Polycarbonate Diol Obtained

| | | | | | | | | | | |
|---|---|---|---|---|---|---|---|---|---|---|
| Product | Yield | | % | 97.8 | 96.3 | 96.2 | 95.8 | 85.0 | 98.8 | 96.5 |
| | APHA | | | 50 | 50 | 40 | 50 | 40 | 300 | 60 |
| | Hydroxyl value | | mgKOH/g | 135.2 | 175.5 | 191.3 | 183.6 | 148.8 | 199.6 | 147.8 |
| | Catalyst amount | | ppm | 8.9 | 1.8 | 3.7 | 1.9 | 0.4 | 3.4 | 9.3 |
| | Turbidity | | ppm | 0.24 | 0.14 | 0.16 | 0.14 | - | - | - |
| | Mn (NMR) | | | 900 | 770 | 790 | 770 | 890 | 700 | 930 |
| | Ratio of total (NMR) | 16HD | | 50 | 50 | 52 | 51 | 43 | 53 | 53 |
| | | ISB | | 50 | 50 | 48 | 49 | 57 | 47 | 47 |
| | | NPG | | | | | | | | |
| | Terminal ratio (NMR) | 16HD | | 31 | 39 | 26 | 39 | 9 | 15 | 31 |
| | | ISB | | 69 | 61 | 74 | 61 | 91 | 85 | 69 |
| | | NPG | | | | | | | | |

[Table 3]

Table 3: Production Conditions and Physical Properties of Polycarbonate Diol Obtained

| | | | | Example | | | | | Comparative Example | | |
|---|---|---|---|---|---|---|---|---|---|---|---|
| | | | | 5 | 6 | 7 | 8 | 9 | 4 | 5 | 6 |
| Raw material | Dihydroxy compound | 16HD | mol% | 40 | 40 | 40 | 40 | 40 | 40 | 40 | 50 |
| | | ISB | | | | | | | | | |
| | | NPG | | 60 | 60 | 60 | 60 | 60 | 60 | 60 | 50 |
| | Catalyst | Amount | µmol/ mol-diol | 50 | 50 | 10 | 10 | 20 | 2 | 20 | 50 |
| Reaction conditions | First step | Capacity of reaction tank | L | 180 | 180 | 180 | 180 | 180 | 180 | 180 | 5 |
| | | Maximum temperature of heat medium of reactor | °C | 147 | 146 | 172 | 173 | 194 | 195 | 164 | 170 |
| | | Temperature (internal temperature) of reaction solution | °C | 140 | 137 | 160 | 161 | 170 | 184 | 160 | 160 |
| | | Difference between maximum temperature of heat medium of reactor and internal temperature | °C | 7 | 9 | 12 | 12 | 24 | 11 | 4 | 10 |
| | | Temperature of heat medium entering reflux condenser | °C | 100 | air cool | air cool | air cool | 100 | air cool | air cool | none |
| | | Reaction time | min | 150 | 150 | 115 | 130 | 305 | 70 | 960 | 605 |
| | | Phenol distillate volume/ theoretical distillate volume | wt% | 80 | 80 | 80 | 80 | 106 | 80 | 99 | 103 |
| | Second step | Capacity of reaction tank | L | 180 | 180 | 180 | 180 | | 180 | | |
| | | Maximum temperature of heat medium of reactor | °C | 173 | 178 | 196 | 209 | | 194 | | |
| | | Temperature (internal temperature) of reaction solution | °C | 151 | 163 | 170 | 187 | | 185 | | |
| | | Difference between maximum temperature of heat medium of reactor and internal temperature | °C | 22 | 15 | 26 | 22 | | 9 | | |
| | | Temperature of heat medium entering reflux condenser | °C | 100 | 100 | 100 | 100 | | air cool | | |
| | | Reaction time | min | 80 | 80 | 210 | 100 | | 120 | | |
| | | Phenol distillate volume/ theoretical distillate volume | wt% | 22 | 24 | 26 | 22 | | 36 | | |
| | All steps | Reaction time | min | 230 | 230 | 335 | 230 | 305 | 190 | 960 | 605 |
| | | Amount of monomer distilled out | wt% | 7.6 | 8.2 | 8.9 | 5.1 | 7.6 | 18.5 | 0.6 | 13.1 |

Table 3 (continued): Production Conditions and Physical Properties of Polycarbonate Diol Obtained

| | | | | | | | | | | | |
|---|---|---|---|---|---|---|---|---|---|---|---|
| Product | Yield | | % | 96.6 | 95.1 | 89.0 | 94.0 | 89.8 | 80.8 | 98.3 | 86.8 |
| | APHA | | | 30 | 20 | 30 | 20 | 30 | 30 | 250 | 20 |
| | Hydroxyl value | | mgKOH/g | 154.2 | 140.0 | 59.9 | 59.0 | 57.8 | 48.7 | 59.4 | 133.7 |
| | Catalyst amount | | ppm | 9.7 | 10.2 | 1.7 | 1.5 | 3.2 | 0.5 | 3.0 | 10.5 |
| | Turbidity | | ppm | 0.53 | 0.67 | 0.20 | 0.19 | 0.22 | 0.16 | 0.25 | 0.23 |
| | Mn (NMR) | | | 810 | 860 | 1960 | 2010 | 1930 | 2830 | 2030 | 850 |
| | Ratio of total (NMR) | 16HD | | 43 | 44 | 45 | 44 | 45 | 49 | 42 | 55 |
| | | ISB | | | | | | | | | |
| | | NPG | | 57 | 56 | 55 | 56 | 55 | 51 | 58 | 45 |
| | Terminal ratio (NMR) | 16HD | | 34 | 35 | 31 | 27 | 31 | 10 | 17 | 48 |
| | | ISB | | | | | | | | | |
| | | NPG | | 66 | 65 | 69 | 73 | 69 | 90 | 83 | 55 |

[Example 2-2]

The polycarbonate polyol produced in Example 2 was subjected to thin-film distillation. The hydroxyl value after thin-film distillation was 143.0. This polycarbonate polyol was previously heated (for example, 80°C), and 100.9 g thereof was added to a 500-mL separable flask. Furthermore, 6.26 g of 1,4-butanediol was added, and 0.027 g of dioctyltin dineodecanoate was added dropwise. Subsequently, dimethylacetamide (DMAc) was added, and the contents were dissolved by dipping an oil bath flask set at 55°C. Stirring was started at about 60 rpm, and 48.7 g of diphenylmethane diisocyanate (MDI) at ordinary temperature•solid was added. Furthermore, MDI up to 3.0 g was gradually added to such an extent that the molecular weight in terms of weight average molecular weight measured by GPC exceeds 150,000, whereby a polyurethane solution having a solid content concentration of 32 wt% was obtained. This polyurethane solution was diluted to a solid content concentration of 30 wt%, coated by a doctor blade on a NITOFLON sheet to have a uniform film thickness and dried by a drier to obtain a polyurethane film.

[Example 7-2]

The polycarbonate polyol produced in Example 7 was subjected to thin-film distillation. The hydroxyl value after thin-film distillation was 56.5.

This polycarbonate polyol was previously heated (for example, 80°C), and 112.7 g thereof was added to a 500-mL separable flask. Furthermore, 5.13 g of 1,4-butanediol was added, and 0.057 g of dioctyltin dineodecanoate was added dropwise. Subsequently, dimethylformamide (DMF) was added, and the contents were dissolved by dipping an oil bath flask set at 55°C. Stirring was started at about 60 rpm, and 28.6 g of diphenylmethane diisocyanate (MDI) at ordinary temperature•solid was added. Furthermore, MDI up to 0.1 g was gradually added to such an extent that the molecular weight in terms of weight average molecular weight measured by GPC exceeds 150,000, whereby a polyurethane solution having a solid content concentration of 36 wt% was obtained. This polyurethane solution was diluted to a solid content concentration of 30 wt%, coated by a doctor blade on a NITOFLON sheet to have a uniform film thickness and dried by a drier to obtain a polyurethane film.

Industrial Applicability

According to the present invention, a polycarbonate polyol with low coloration can be produced at a high yield, and a polyurethane produced using the same exhibits high hardness, excellent abrasion resistance and long-term maintainability of surface properties and therefore, is suitably used, for example, for a coating agent, an aqueous paint, an adhesive, a synthetic leather, and an artificial leather. The polyurethane produced using a polycarbonate polyol produced by the production method of the present invention can be also suitably used for applications requiring affinity for water, for example, when producing an aqueous paint small in the environmental load. Thus, the present invention is very useful in industry.

## Claims

**1.** A method for producing a polycarbonate polyol having a repeating unit represented by the following formula (A) and having a hydroxyl value of 10 to 400 mgKOH/g, wherein the proportion of the structure where the molecular chain terminal contained in the polycarbonate polyol product is an alkyloxy group or an aryloxy group is 5 mol% or less, in terms of the number of all terminals, said method comprising:

a step of performing a polycondensation reaction of a dihydroxy compound with a carbonic acid diester through a transesterification reaction therebetween in presence of a catalyst,
wherein at least one reactor for distilling out a monohydroxy compound generated as a byproduct during the transesterification reaction is a reactor having an internal volume of 20 L or more and being equipped with a reflux condenser and a heating device for heating the reactor by using a heat medium,
a difference between a temperature of the heat medium and a temperature of a reaction solution in the reactor is at least 5°C or more, and
a total amount of monomers distilled out in all reaction steps is 15 wt% or less based on a gross weight of raw material monomers:

[Chem. 1]

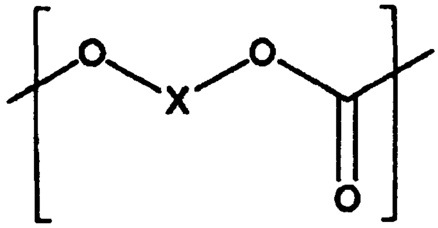

(A)

(wherein X represents a divalent group having a carbon number of 1 to 20, which may contain a heteroatom). , wherein all the claimed parameters are measured according to the relevant method detailed in the description.

2. The method for producing a polycarbonate polyol according to claim 1, wherein the dihydroxy compound contains at least one dihydroxy compound selected from a dihydroxy compound having a structure represented by the following formula (B) and a dihydroxy compound represented by the following formula (C):

[Chem. 2]

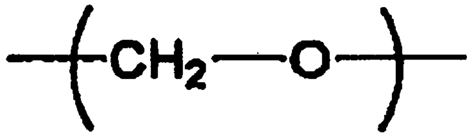

(B)

(wherein a case where the moiety represented by formula (B) is a part of $-CH_2-O-H$ is excluded); and

[Chem. 3]

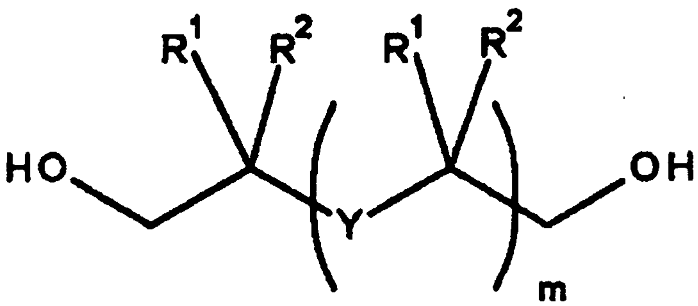

(C)

(wherein m is 0 or 1; each of $R^1$ and $R^2$ is independently a group having a carbon number of 1 to 15 selected from the group consisting of an alkyl group, an aryl group, an alkenyl group, an alkynyl group and an alkoxy group and may contain, within the carbon number range above, an oxygen atom, a sulfur atom, a nitrogen atom, a halogen atom or a substituent containing such an atom; and Y represents a divalent group having a carbon number of 1 to 20, which may contain a heteroatom).

3. The method for producing a polycarbonate polyol according to claim 1 or 2, wherein out of the dihydroxy compounds, at least one dihydroxy compound has a boiling point of 300°C or less at atmospheric pressure.

4. The method for producing a polycarbonate polyol according to any one of claims 1 to 3,

wherein the polycondensation reaction is performed in multiple steps by using a plurality of reactors.

5. The method for producing a polycarbonate polyol according to any one of claims 1 to 4, wherein a compound having at least one metal selected from the group consisting of metals belonging to periodic table Group 2 is used as the catalyst in an amount of, in terms of a total amount of all metal atoms, from 5 to 500 μmol per mol of all dihydroxy compounds used as a raw material.

6. The method for producing a polycarbonate polyol according to claim 5, wherein the catalyst is at least one metal compound selected from the group consisting of a magnesium compound and a calcium compound.

7. The method for producing a polycarbonate polyol according to any one of claims 1 to 6, wherein the carbonic acid diester is a diaryl carbonate.

8. The method for producing a polycarbonate polyol according to any one of claims 1 to 7, wherein a maximum temperature of the reaction solution in any one reaction step of the transesterification reaction is less than 190°C.

9. The method for producing a polycarbonate polyol according to any one of claims 1 to 8, wherein a maximum temperature of the heat medium employed in the reactor used in any one reaction step of the transesterification reaction is less than 240°C.

10. The method for producing a polycarbonate polyol according to any one of claims 1 to 9, wherein in the transesterification reaction,

1) when a distillate volume of the monohydroxy compound generated as a byproduct from the carbonic acid diester is less than 50% based on a total theoretical production amount of a monohydroxy compound,

a) a pressure is from 10 to 4 kPa at a temperature of 110°C to less than 130°C,
b) a pressure is from 14 to 6 kPa at a temperature of 130°C to less than 150°C,
c) a pressure is from 20 to 8 kPa at a temperature of 150°C to less than 170°C, and
d) a pressure is from 30 to 10 kPa at a temperature of 170°C to less than 190°C,

and
2) when a distillate volume of the monohydroxy compound generated as a byproduct from the carbonic acid diester is 50% or more based on a total theoretical production amount of a monohydroxy compound,

a) a pressure is from 6 to 0.01 kPa at a temperature of 110°C to less than 130°C,
b) a pressure is from 8 to 0.01 kPa at a temperature of 130°C to less than 150°C,
c) a pressure is from 12 to 0.01 kPa at a temperature of 150°C to less than 170°C, and
(d) a pressure is from 16 to 0.01 kPa at a temperature of 170°C to less than 190°C.

11. The method for producing a polycarbonate polyol according to any one of claims 2 to 10, wherein the dihydroxy compound having a structure represented by formula (B) is a dihydroxy compound represented by the following formula (D):

[Chem. 4]

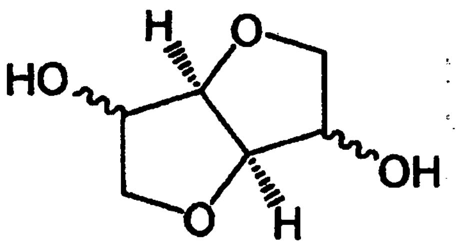

(D)

**12.** The method for producing a polycarbonate polyol according to any one of claims 1 to 11, wherein the dihydroxy compound contains at least one dihydroxy compound selected from the group consisting of aliphatic dihydroxy compounds.

**13.** The method for producing a polycarbonate polyol according to any one of claims 1 to 12, wherein a number average molecular weight of the obtained polycarbonate polyol is from 250 to 5,000 measured as indicated in the description.

**14.** The method for producing a polycarbonate polyol according to any one of claims 1 to 13, wherein a Hazen color number of the obtained polycarbonate polyol as measured in accordance with JIS-K0071-1 (1998) is 100 or less.

**15.** The method for producing a polycarbonate polyol according to any one of claims 1 to 14, wherein a turbidity of the obtained polycarbonate polyol when diluted with methylene chloride to a concentration of 50% is 1.0 ppm or less measured as indicated in the description.

**Patentansprüche**

**1.** Ein Verfahren zur Herstellung eines Polycarbonatpolyols mit einer Wiederholungseinheit dargestellt durch die nachstehende Formel (A) und mit einem Hydroxylwert von 10 bis 400 mgKOH/g, wobei der Anteil der Struktur, in der das Molekülkettenende, das im Polycarbonatpolyolprodukt enthalten ist, eine Alkyloxygruppe oder eine Aryloxygruppe ist, 5 Mol-% oder weniger beträgt, bezogen auf die Zahl aller Enden, wobei das Verfahren umfasst:

einen Schritt des Durchführens einer Polykondensationsreaktion einer Dihydroxyverbindung mit einem Kohlensäurediester durch eine Umesterungsreaktion zwischen diesen in Gegenwart eines Katalysators,
wobei mindestens ein Reaktor zum Abdestillieren einer Monohydroxyverbindung, die als ein Nebenprodukt während der Umesterungsreaktion erzeugt wird, ein Reaktor ist, der ein inneres Volumen von 20 l oder mehr aufweist und mit einem Rückflusskühler und einer Heizvorrichtung zum Erwärmen des Reaktor unter Verwendung eines Wärmeträgers ausgestattet ist,
eine Differenz zwischen einer Temperatur des Wärmeträgers und einer Temperatur einer Reaktionslösung in dem Reaktor mindestens 5°C oder mehr beträgt, und
eine Gesamtmenge der in allen Reaktionsschritten abdestillierten Monomere 15 Gew.-% oder weniger beträgt, bezogen auf ein Rohgewicht von Ausgangsmaterialmono meren:

[Chem. 1]

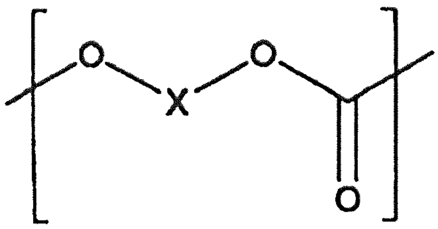
(A)

(wobei X eine zweiwertige Gruppe mit einer Kohlenstoffzahl von 1 bis 20 darstellt, die ein Heteroatom enthalten kann), wobei alle beanspruchten Parameter gemäß dem in der Beschreibung beschriebenen relevanten Verfahren gemessen werden.

**2.** Das Verfahren zur Herstellung eines Polycarbonatpolyols nach Anspruch 1, wobei die Dihydroxyverbindung mindestens eine Dihydroxyverbindung enthält, ausgewählt aus einer Dihydroxyverbindung mit einer Struktur dargestellt durch die nachstehende Formel (B) und einer Dihydroxyverbindung dargestellt durch die nachstehende Formel (C):

[Chem. 2]

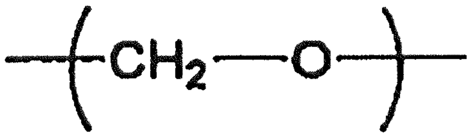

(B)

(wobei ein Fall, bei dem die durch Formel (B) dargestellte Einheit ein Teil von $-CH_2-O-H$ ist, ausgeschlossen ist); und

[Chem. 3]

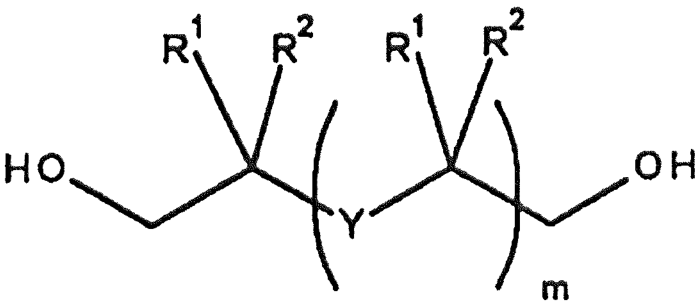

(C)

(wobei m gleich 0 oder 1 ist; jedes aus $R^1$ und $R^2$ unabhängig eine Gruppe mit einer Kohlenstoffzahl von 1 bis 15 ist, ausgewählt aus der Gruppe bestehend aus einer Alkylgruppe, einer Arylgruppe, einer Alkenylgruppe, einer Alkinylgruppe und einer Alkoxygruppe, und innerhalb des vorstehenden Kohlenstoffzahlenbereichs ein Sauerstoffatom, ein Schwefelatom, ein Stickstoffatom, ein Halogenatom oder einen Substituenten, der solch ein Atom enthält, enthalten kann; und Y eine zweiwertige Gruppe mit einer Kohlenstoffzahl von 1 bis 20, die ein Heteroatom enthalten kann, darstellt).

3. Das Verfahren zur Herstellung eines Polycarbonatpolyols nach Anspruch 1 oder 2, wobei von den Dihydroxyverbindungen mindestens eine Dihydroxyverbindung einen Siedepunkt von 300°C oder weniger bei atmosphärischem Druck aufweist.

4. Das Verfahren zur Herstellung eines Polycarbonatpolyols nach einem der Ansprüche 1 bis 3, wobei die Polykondensationsreaktion in mehreren Schritten unter Verwendung einer Vielzahl von Reaktoren durchgeführt wird.

5. Das Verfahren zur Herstellung eines Polycarbonatpolyols nach einem der Ansprüche 1 bis 4, wobei eine Verbindung, die mindestens ein Metall, ausgewählt aus der Gruppe bestehend aus Metallen der Gruppe 2 des Periodensystems, aufweist, als der Katalysator verwendet wird, in einer Menge, ausgedrückt als eine Gesamtmenge aller Metallatome, von 5 bis 500 μmol je Mol aus allen Dihydroxyverbindungen, die als Ausgangsmaterial verwendet werden.

6. Das Verfahren zur Herstellung eines Polycarbonatpolyols nach Anspruch 5, wobei der Katalysator mindestens eine Metallverbindung ausgewählt aus der Gruppe, bestehend aus einer Magnesiumverbindung und einer Calciumverbindung ist.

7. Das Verfahren zur Herstellung eines Polycarbonatpolyols nach einem der Ansprüche 1 bis 6, wobei der Kohlensäurediester ein Diarylcarbonat ist.

8. Das Verfahren zur Herstellung eines Polycarbonatpolyols nach einem der Ansprüche 1 bis 7,

wobei eine maximale Temperatur der Reaktionslösung in jedem der Reaktionsschritte der Umesterungsreaktion weniger als 190°C beträgt.

**9.** Das Verfahren zur Herstellung eines Polycarbonatpolyols nach einem der Ansprüche 1 bis 8, wobei eine maximale Temperatur des im Reaktor eingesetzten Wärmeträgers in jedem der Reaktionsschritte der Umesterungsreaktion weniger als 240°C beträgt.

**10.** Das Verfahren zur Herstellung eines Polycarbonatpolyols nach einem der Ansprüche 1 bis 9, wobei bei der Umesterungsreaktion,

1) wenn ein Destillatvolumen der als ein Nebenprodukt aus dem Kohlensäurediester erzeugten Monohydroxyverbindung weniger als 50% beträgt, bezogen auf eine theoretische Gesamtproduktionsmenge einer Monohydroxyverbindung,

a) ein Druck 10 bis 4 kPa bei einer Temperatur von 110°C bis weniger als 130°C beträgt,
b) ein Druck 14 bis 6 kPa bei einer Temperatur von 130°C bis weniger als 150°C beträgt,
c) ein Druck 20 bis 8 kPa bei einer Temperatur von 150°C bis weniger als 170°C beträgt, und
d) ein Druck 30 bis 10 kPa bei einer Temperatur von 170°C bis weniger als 190°C beträgt,

und
2) wenn ein Destillatvolumen der als ein Nebenprodukt aus dem Kohlensäureester erzeugten Monohydroxyverbindung 50% oder mehr beträgt, bezogen auf eine theoretische Gesamtproduktionsmenge einer Monohydroxyverbindung,

a) ein Druck 6 bis 0,01 kPa bei einer Temperatur von 110°C bis weniger als 130°C beträgt,
b) ein Druck 8 bis 0,01 kPa bei einer Temperatur von 130°C bis weniger als 150°C beträgt,
c) ein Druck 12 bis 0,01 kPa bei einer Temperatur von 150°C bis weniger als 170°C beträgt, und
(d) ein Druck 16 bis 0,01 kPa bei einer Temperatur von 170°C bis weniger als 190°C beträgt.

**11.** Das Verfahren zur Herstellung eines Polycarbonatpolyols nach einem der Ansprüche 2 bis 10, wobei die Dihydroxyverbindung mit einer Struktur dargestellt durch Formel (B) eine Dihydroxyverbindung dargestellt durch die nachstehende Formel (D) ist:

[Chem. 4]

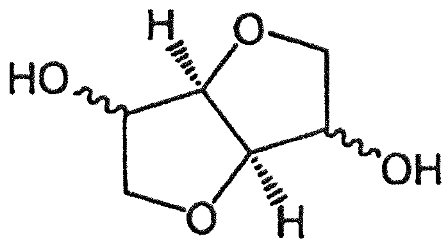

(D)

**12.** Das Verfahren zur Herstellung eines Polycarbonatpolyols nach einem der Ansprüche 1 bis 11, wobei die Dihydroxyverbindung mindestens eine Dihydroxyverbindung ausgewählt aus der Gruppe bestehend aus aliphatischen Dihydroxyverbindungen enthält.

**13.** Das Verfahren zur Herstellung eines Polycarbonatpolyols nach einem der Ansprüche 1 bis 12, wobei ein Zahlenmittel des Molekulargewichts des erhaltenen Polyols 250 bis 5.000 beträgt, gemessen wie in der Beschreibung angegeben.

**14.** Das Verfahren zur Herstellung eines Polycarbonatpolyols nach einem der Ansprüche 1 bis 13, wobei eine Hazen-Farbzahl des erhaltenen Polycarbonatpolyols, wie gemäß JIS-K0071-1 (1998) gemessen, 100 oder weniger beträgt.

**15.** Das Verfahren zur Herstellung eines Polycarbonatpolyols nach einem der Ansprüche 1 bis 14, wobei eine Trübung des erhaltenen Polycarbonatpolyols, wenn es mit Methylenchlorid auf eine Konzentration von 50% verdünnt wird, 1,0 ppm oder weniger beträgt, gemessen wie in der Beschreibung angegeben.

## Revendications

**1.** Méthode de production d'un polycarbonate polyol ayant un motif répétitif représenté par la formule (A) qui suit et ayant un indice d'hydroxyle de 10 à 400 mg KOH/g, dans laquelle la proportion de la structure où la terminaison de chaîne moléculaire contenue dans le produit polycarbonate polyol est un groupe alkyloxy ou un groupe aryloxy est de 5 % en moles ou moins, en termes du nombre de toutes les terminaisons, ladite méthode comprenant :

une étape de mise en œuvre d'une réaction de polycondensation d'un composé dihydroxy avec un diester d'acide carbonique par l'intermédiaire d'une réaction de trans-estérification entre eux en présence d'un catalyseur,
dans laquelle au moins un réacteur pour séparer par distillation un composé monohydroxy généré comme sous-produit durant la réaction de trans-estérification est un réacteur ayant un volume interne de 20 litres ou plus et équipé d'un condenseur à reflux et d'un dispositif chauffant pour chauffer le réacteur par utilisation d'un milieu chaud,
la différence entre la température du milieu chaud et la température de la solution réactionnelle dans le réacteur est d'au moins 5 °C ou plus, et
la quantité totale de monomères séparés par distillation dans toutes les étapes réactionnelles est de 15 % en poids ou moins par rapport au poids brut des matières premières monomères :

[formule chimique 1]

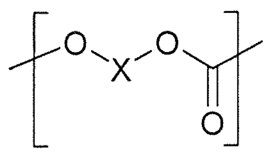

(A)

(dans laquelle X représente un groupe divalent ayant un nombre de carbones de 1 à 20, qui peut contenir un hétéroatome), dans laquelle tous les paramètres revendiqués sont mesurés conformément à la méthode pertinente détaillée dans la description.

**2.** Méthode de production d'un polycarbonate polyol selon la revendication 1, dans laquelle le composé dihydroxy contient au moins un composé dihydroxy choisi parmi un composé dihydroxy ayant une structure représentée par la formule (B) qui suit et un composé dihydroxy représenté par la formule (C) qui suit :

[formule chimique 2]

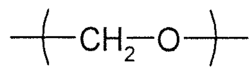

(B)

(à l'exclusion du cas où le fragment représenté par la formule (B) constitue une partie de $-CH_2-O-H$) ; et

[formule chimique 3]

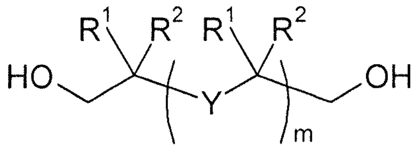

(C)

(dans laquelle m vaut 0 ou 1 ; chacun de $R^1$ et $R^2$ est indépendamment un groupe ayant un nombre de carbones de 1 à 15 choisi dans le groupe constitué par un groupe alkyle, un groupe aryle, un groupe alcényle, un groupe alcynyle et un groupe alcoxy et peut contenir, au sein de la plage de nombre de carbones ci-dessus, un atome d'oxygène, un atome de soufre, un atome d'azote, un atome d'halogène ou un substituant contenant un tel atome ; et Y représente un groupe divalent ayant un nombre de carbones de 1 à 20, qui peut contenir un hétéroatome).

**3.** Méthode de production d'un polycarbonate polyol selon la revendication 1 ou 2, dans laquelle, parmi les composés dihydroxy, au moins un composé dihydroxy a un point d'ébullition de 300 °C ou moins à pression atmosphérique.

**4.** Méthode de production d'un polycarbonate polyol selon l'une quelconque des revendications 1 à 3, dans laquelle la réaction de polycondensation est effectuée en plusieurs étapes par utilisation de plusieurs réacteurs.

**5.** Méthode de production d'un polycarbonate polyol selon l'une quelconque des revendications 1 à 4, dans laquelle un composé ayant au moins un métal choisi dans le groupe constitué par les métaux appartenant au Groupe 2 du Tableau Périodique est utilisé en tant que catalyseur en une quantité, en termes de la quantité totale de tous les atomes métalliques, de 5 à 500 μmol par mole de tous les composés dihydroxy utilisés en tant que matières premières.

**6.** Méthode de production d'un polycarbonate polyol selon la revendication 5, dans laquelle le catalyseur est au moins un composé métallique choisi dans le groupe constitué par un composé du magnésium et un composé du calcium.

**7.** Méthode de production d'un polycarbonate polyol selon l'une quelconque des revendications 1 à 6, dans laquelle le diester d'acide carbonique est un carbonate de diaryle.

**8.** Méthode de production d'un polycarbonate polyol selon l'une quelconque des revendications 1 à 7, dans laquelle la température maximale de la solution réactionnelle dans n'importe quelle étape réactionnelle de la réaction de trans-estérification est inférieure à 190 °C.

**9.** Méthode de production d'un polycarbonate polyol selon l'une quelconque des revendications 1 à 8, dans laquelle la température maximale du milieu chaud employé dans le réacteur utilisé dans n'importe quelle étape réactionnelle de la réaction de trans-estérification est inférieure à 240 °C.

**10.** Méthode de production d'un polycarbonate polyol selon l'une quelconque des revendications 1 à 9, dans laquelle, dans la réaction de trans-estérification,

1) quand le volume de distillat du composé monohydroxy généré comme sous-produit à partir du diester d'acide carbonique est inférieur à 50 % par rapport à la quantité de production théorique totale d'un composé monohydroxy,

a) la pression est de 10 à 4 kPa à une température de 110 °C à moins de 130 °C,
b) la pression est de 14 à 6 kPa à une température de 130 °C à moins de 150 °C,
c) la pression est de 20 à 8 kPa à une température de 150 °C à moins de 170 °C, et
d) la pression est de 30 à 10 kPa à une température de 170 °C à moins de 190 °C, et

2) quand le volume de distillat du composé monohydroxy généré comme sous-produit à partir du diester d'acide carbonique est de 50 % ou plus par rapport à la quantité de production théorique totale d'un composé monohydroxy,

a) la pression est de 6 à 0,01 kPa à une température de 110 °C à moins de 130 °C,
b) la pression est de 8 à 0,01 kPa à une température de 130 °C à moins de 150 °C,
c) la pression est de 12 à 0,01 kPa à une température de 150 °C à moins de 170 °C, et
d) la pression est de 16 à 0,01 kPa à une température de 170 °C à moins de 190 °C.

**11.** Méthode de production d'un polycarbonate polyol selon l'une quelconque des revendications 2 à 10, dans laquelle le composé dihydroxy ayant une structure représentée par la formule (B) est un composé dihydroxy représenté par la formule (D) suivante :

[formule chimique 4]

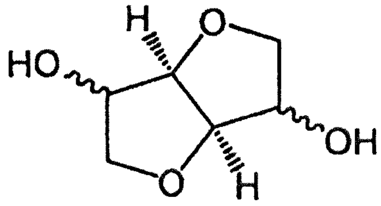

(D)

**12.** Méthode de production d'un polycarbonate polyol selon l'une quelconque des revendications 1 à 11, dans laquelle le composé dihydroxy contient au moins un composé dihydroxy choisi dans le groupe constitué par les composés dihydroxy aliphatiques.

**13.** Méthode de production d'un polycarbonate polyol selon l'une quelconque des revendications 1 à 12, dans laquelle la masse moléculaire moyenne en nombre du polycarbonate polyol obtenu est de 250 à 5 000, mesurée comme indiqué dans la description.

**14.** Méthode de production d'un polycarbonate polyol selon l'une quelconque des revendications 1 à 13, dans laquelle l'indice de couleur Hazen du polycarbonate polyol obtenu, tel que mesuré conformément à la norme JIS-K0071-1 (1998), est de 100 ou moins.

**15.** Méthode de production d'un polycarbonate polyol selon l'une quelconque des revendications 1 à 14, dans laquelle la turbidité du polycarbonate polyol obtenu, lorsqu'il est dilué avec du chlorure de méthylène à une concentration de 50 %, est de 1 ppm ou moins, mesurée comme indiqué dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004111106 A
- JP 5051428 A
- JP 2289616 A
- JP 2008056844 A
- JP 4198940 B
- JP 2009161745 A
- JP 2009057609 A


### Non-patent literature cited in the description


- **KATSUJI MATSUNAGA.** Polyurethane no Kiso to Oyo (Basics and Applications of Polyurethane). CMC Shuppan, November 2006, 96-106